# EUROPEAN PATENT SPECIFICATION

(11) **EP 1 829 637 B1**
(45) Date of publication and mention of the grant of the patent: **22.07.2015**
(21) Application number: 05811525.4
(22) Date of filing: 28.11.2005
(51) Int. Cl.: B23B 7/06, B23B 13/02, B23B 31/20, B23Q 1/76

(54) **MATERIAL HOLDING DEVICE AND MATERIAL GUIDE DEVICE**
MATERIALHALTEVORRICHTUNG UND MATERIALFÜHRUNGSVORRICHTUNG
DISPOSITIF DE MAINTIEN DE MATERIEL ET DISPOSITIF DE GUIDAGE DE MATERIEL

(30) Priority: 30.11.2004 JP 2004345309
(43) Date of publication of application: 05.09.2007
(73) Proprietor: Citizen Holdings Co., Ltd., Nishitokyo-shi, Tokyo 188-8511 (JP)
(72) Inventor: TAKAHASHI, Toru c/o Citizen Machinery Co. Ltd., Kitasaku-gun, Nagano 389-0206 (JP); ANDO, Yosuke c/o Citizen Watch Co. Ltd., Nishitokyo-shi, Tokyo 188-8511 (JP)
(74) Representative: Patentanwälte Ruff, Wilhelm, Beier, Dauster & Partner
(86) International application number: PCT/JP2005/022230
(87) International publication number: WO 2006/059739

(56) References cited:
- JP-A- 60 094 209
- JP-A- 60 094 209
- JP-A- 2002 355 707
- JP-A- 2002 355 707
- JP-B2- 2 566 570
- US-A- 2 517 908
- US-A- 4 379 562
- US-A- 4 397 562
- US-A- 4 699 389
- US-A- 4 699 389

## Description

### TECHNICAL FIELD

The present invention relates to a material holding apparatus according to the preamble of claim 1. The present invention also relates to a material guiding apparatus according to the preamble of claim 8.

### BACKGROUND ART

It is known that a machine tool incorporates therein a material holding apparatus for fixedly holding a workpiece during a machining process, the material holding apparatus including a chuck having a holding section capable of opening and closing, and an actuating mechanism for actuating the holding section of the chuck to open or close. For example, in a machine tool, such as an NC lathe, that can perform an automatic turning operation (generically referred to as an automatic lathe in this application), it is well known that a material guiding apparatus includes a chuck (commonly referred to as a collet chuck) formed from a hollow tubular or cylindrical body provided with an elastically deformable holding section having a slotted structure, the chuck being coaxially mounted on an inner front-end region of a main spindle of the automatic lathe, and an actuating mechanism installed in the spindle for elastically deforming the holding section of the chuck under the automatic control of a driving section.

In the conventional material holding apparatus incorporated into the main spindle of the automatic lathe, the actuating mechanism typically includes a hollow tubular or cylindrical actuating member axially movably provided inside the spindle, a driving mechanism for transmitting an output power of the driving section to the actuating member as an axial thrust force so as.to make the actuating member move from an opening-operation position allowing the holding section of the chuck to open to a closing-operation position allowing the holding section of the chuck to close, and a return spring for elastically biasing the actuating member from the closing-operation position toward the opening-operation position (see, e.g., Japanese Patent No. 2566570 (JP-B-2566570)).

In this configuration, a bar-shaped workpiece is fed to the interior of the spindle and actuating member from the rear side of the spindle and, in this state, the actuating member is driven by the driving mechanism to axially move along the spindle. Due to this movement, the holding section of the chuck receives a pressing force on a truncated-conical pressure receiving surface provided on its outer circumferential surface and elastically deforms (or closes) to reduce its inner diameter (or diametrally diminish) so as to firmly and securely hold the workpiece. From this state, when the driving force of the driving mechanism is inversed or relieved, the actuating member moves in a reverse direction along the spindle due to the elastic biasing force of the return spring. Due to this movement, the pressing force to the holding section of the chuck is relieved, and the holding section elastically restores (or opens) to increase its inner diameter (or diametrally enlarge) so as to release the workpiece.

Conventionally, in the above-described material holding apparatus provided in the interior of the spindle, either one of a configuration in which the actuating member axially moves relative to the chuck disposed inside the spindle in a stationary manner, or a configuration in which the actuating member is joined to the chuck and axially moves together with the chuck in the interior of the spindle, is suitably or selectively adopted (see, e.g., Japanese Unexamined Patent Publication (Kokai) No. 2000-246522 (JP-A-2000-246522)).

In the former configuration, the actuating member, coaxially accommodated and supported in the spindle, in turn coaxially accommodates and supports the chuck in a front end region of the member, and a truncated-conical working surface engageable with the pressure receiving surface in the outer circumference of the holding section is formed on an annular portion of the front end of the actuating member that surrounds the chuck. When the workpiece is securely held, a holding force is obtained by displacing the actuating member in a direction as to push out the chuck from the spindle relative to the chuck and thereby pressing the working surface against the pressure receiving surface.

On the other hand, in the latter configuration, the chuck is coaxially accommodated and supported in the front end region of the spindle and the actuating member is coaxially accommodated and supported in a region behind the chuck in the spindle, and a truncated-conical working surface engageable with the pressure receiving surface in the outer circumference of the holding section is formed on the annular portion of the front end of the spindle that surrounds the chuck. When the workpiece is securely held, a holding force is obtained by displacing the actuating member together with the chuck in a direction as to be drawn into the spindle and thereby pressing the pressure receiving surface against the working surface.

It should be noted that, in this application, a structural type in which the holding force of the chuck is obtained by displacing the actuating member in a push-out direction in the spindle is referred to as "an actuating-member pushing type", while a structural type in which the holding force of the chuck is obtained by displacing the actuating member in a draw-in direction in the spindle is referred to as "an actuating member drawing type".

In the material holding apparatus of the actuating-member pushing type described above, an axially front portion of the chuck typically has an abutment surface adapted to abut against a cap attached to the front end of the spindle, so that the chuck is kept in a stationary state in the spindle by the cap against an axial component of the pressing force applied from the working surface of the actuating member. On the other hand, in the material holding apparatus of the actuating-member drawing type described above, an axially rear portion of the chuck typically has a joint structure (e.g., a screw structure) adapted to be detachably joined to the front end of the actuating member.

As described above, in the conventional material holding apparatus, the structure of the chuck naturally varies depending on the operating mode or type of the actuating member. In this application, a chuck provided in the material holding apparatus of the actuating-member pushing type is referred to as "a chuck having a stationary configuration", while a chuck provided in the material holding apparatus of the actuating-member drawing type is referred to as "a chuck having a moving configuration".

Incidentally, it is known that an automatic lathe includes a material guiding apparatus, as an auxiliary support apparatus, installed on a lathe bed in proximity to a working position for machining, performed by a tool, to support a bar-shaped workpiece securely held by the material holding apparatus of the spindle near a machined portion of the workpiece defined at a leading end region thereof (see, e.g., Japanese Patent No. 2750356 (JP-B-2750356)). The material guiding apparatus typically includes a tubular or cylindrical guide bush having a hollow tubular material support section capable of opening and closing, and an adjusting mechanism for adjusting a radial dimension of the material support section of the guide bush.

In the conventional material guiding apparatus, either one of a stationary structure in which the guide bush is immovably disposed with respect to the rapidly rotating workpiece, or a rotary structure in which the guide bush rapidly rotates together with the workpiece, is suitably or selectively adopted. In either structure, the material guiding apparatus supports the workpiece by the material support section of the guide bush during a turning operation, to prevent wobble or oscillation at the machined portion of the workpiece, so as to allow a high-precision product to be formed.

Further, in an automatic lathe having a configuration such that a main spindle securely holding a workpiece can perform an axial feeding motion, the material guiding apparatus, in either of the stationary or rotary structure, can support the workpiece fed by the axial motion of the spindle and accurately guide the workpiece in an axial direction, in a state where the material support section of the guide bush supports the workpiece in a centering manner (i.e., in such a manner that the material axis of the workpiece coincides with the rotation axis thereof).

In this type of material guiding apparatus, in order to attain both a centering support and an axial-guiding support of a workpiece at a desired level or performance, an objective workpiece is inserted into the guide bush before starting the machining operation and the adjusting mechanism is manipulated, so that the material support section of the guide bush is deformed or displaced elastically so as to adjust its inner diameter to match with the outer diameter of the workpiece (having a round or square shape).

In the conventional material guiding apparatus, there is known, as set forth in JP-B-2750356, an adjusting mechanism having a configuration similar to that of the actuating mechanism of the material holding apparatus described above. More specifically, the adjusting mechanism includes an actuating member for actuating the material support section of the guide bush to open or close, a driving mechanism for making the actuating member move from an opening-operation position to a closing-operation position, and a return spring for elastically biasing the actuating member from the closing-operation position toward the opening-operation position. Further, similar to the material holding apparatus, there are known a material' guiding apparatus of an actuating-member pushing type including a guide bush having a stationary configuration (see JP-B-2750356) and a material guiding apparatus of an actuating-member drawing type including a guide bush having a moving configuration (see JP-B-2566570).

In the material holding apparatus of the above-described actuating-member pushing type, the chuck does not move in an axial direction during its opening or closing operation, and therefore it can be reliably prevented that a workpiece securely held by the chuck is dragged by the closing operation of the holding section of the chuck and is axially shifted accordingly. Therefore, in the automatic lathe provided with the material holding apparatus of the actuating-member pushing type, the machining dimensional accuracy of the workpiece in the axial direction can be ensured at a high level. As a result, for example, a cut-off face of the bar-shaped workpiece can be used as an end face of a finished product as it is, so that an end-face finishing process can be eliminated, and cycle time of the machining process as well as an amount of cut material can thus be reduced.

However, in the configuration in which the material holding apparatus of the actuating-member pushing type is incorporated into the spindle of the automatic lathe, the chuck and a portion of the actuating member are accommodated in the front end region of the spindle relatively slidably in a nested manner, and therefore, stiffness or rigidity in the front end region of the spindle tends to deteriorate due to slight clearance provided for ensuring a sliding movement. As a result, rotational accuracy of the spindle may be degraded and machining accuracy of the workpiece may be reduced. In this connection, if the material holding apparatus of the actuating-member pushing type is incorporated into the spindle of the automatic lathe provided with the material guiding apparatus, an influence due to the stiffness or rotational accuracy of the spindle on the machining accuracy of the workpiece is eliminated by the material guiding apparatus.

On the other hand, in the material holding apparatus of the above-described actuating-member drawing type, only the chuck is accommodated relatively slidably in the front end region of the spindle when the material holding apparatus is incorporated into the spindle of the automatic lathe, and therefore it is possible to ensure stiffness or rigidity in the front end region of the spindle and thus to prevent the degradation of the rotational accuracy and the resultant degradation of the machining accuracy. However, the chuck moves slightly in the axial direction during its opening or closing operation, and therefore the workpiece securely held by the chuck is dragged by the closing operation of the holding section of the chuck and is axially shifted accordingly. As a result, the machining dimensional accuracy of the workpiece in the axial direction tends to be reduced. Therefore, in the configuration in which the material holding apparatus of the actuating-member drawing type is incorporated into the spindle of the automatic lathe, for example, it is inappropriate to use a cut-off face of the bar-shaped workpiece as an end face of a finished product in the case where dimensional accuracy in a longitudinal direction is required, so that an end-face finishing process becomes necessary, and cycle time of the machining process, as well as an amount of cut material may be increased.

As described above, in the conventional material holding apparatus, there are advantages and disadvantages depending respectively on the operating modes or types of the actuating members (the pushing type and the drawing type), and thus either one of the operating modes is previously selected for use while taking into consideration the mechanical configuration of the machine tool (e.g., the automatic lathe) on which the material holding apparatus is installed, the material properties of the workpiece to be machined, required machining accuracy and the like. Therefore, conventionally, in the case where it is required to perform various machining processes on a workpiece under different conditions, measures are employed such that two machine tools equipped respectively with the material holding apparatuses including the actuating members having the different operating modes are provided, or alternatively, one mechanical element in a single machine tool (e.g., a spindle stock of the automatic lathe), incorporating therein a material holding apparatus, is replaced as a whole with the other mechanical element incorporating therein another material holding apparatus having the different operating mode. According to the above measures, equipment cost associated with the machine tool may remarkably rise, and the burden on operators associated with the replacement of the mechanical elements may be increased.

Further, in the case where the configuration similar to that of the actuating mechanism of the conventional material holding apparatus described above is applied to the adjusting mechanism of the material guiding apparatus, the problem similar to that in the material holding apparatus may clearly arise. For example, in the case where, in particular, the actuating-member pushing-type structure is applied to the material guiding apparatus having the rotary structure, the stiffness or rigidity of a tubular support member of the material guiding apparatus, which corresponds to the main spindle of the automatic lathe, may be reduced and thus the accuracy of the centering support of the guide bush may be degraded. On the other hand, in the case of providing the material guiding apparatus having the actuating-member drawing-type structure, the axial movement of the guide bush during its opening or closing operation may affect more or less the accuracy of the centering support. Further, if the material guiding apparatuses having both of the operating modes are prepared, the equipment cost associated with the machine tool may remarkably rise, and the burden on the operators associated with the replacement of the mechanical elements may be increased.

US-patent 2,517,908 describes a spindle for a lathe, said spindle having a tubular chuck with a holding section capable of opening and closing and a tubular actuating member for actuating said holding section to open or close. A driving mechanism for making said actuating member move between a closing operation position allowing said holding section to securely hold a workpiece under pressing force and an opening operation position relieving said pressing force and allowing said holding section to release the workpiece comprises a bidirectional driving member. The bidirectional driving member is in the form of two rocking levers, which can be actuated by means of a cylindrical sleeve sliding radially outside of the rocking levers. By means of the rocking levers and the tubular actuating member, no springs or other biasing members are needed and used for securing and releasing a workpiece.

Japanese Patent Abstract JP 2002/355707 A and the corresponding patent publication discloses a work spindle having a material holding apparatus with a tubular chuck having a holding section capable of opening and closing, an actuating member for actuating said holding section to open and close and a driving mechanism for making said actuating member move between a closing operation position allowing said holding section to securely hold a workpiece under pressing force and an opening operation position relieving said pressing force and allowing said holding section to release the workpiece. The driving mechanism comprises a bidirectional driving member in the form of a hydraulically activated piston for selectively applying, to said actuating member, one of a normal driving force for making said actuating member move from said opening operation position to said closing operation position and a reverse driving force for making said actuating member move from said closing operation position to said opening operation position. The hydraulically activated piston comprises two separate pistons, which abut each other in an intermediate position, thereby enabling said driving mechanism to locate the actuating member in an intermediate position between said closing operation position and said opening operation position. When said actuating member is located at said intermediate position by abutting the first piston against the second piston, said holding section of said chuck is only slightly opened from the closing operation position. The material holding apparatus further has a biasing spring, which urges said chuck into a closing operation position. The piston only acts to open the holding section in order to release a workpiece, whereas the biasing spring urges the chuck into the closing operation position. When the piston is activated to move the chuck into the intermediate position, the biasing spring is blocked and pulled back together with the piston. The biasing spring, therefore, does not bias the chuck into the closing operation position when the piston is in the intermediate position.

### DISCLOSURE OF THE INVENTION

It is an object of the present invention to provide a material holding apparatus as defined in claim 1.

It is another object of the present invention to provide a material guiding apparatus as defined in claim 8.

### BRIEF DESCRIPTION OF THE DRAWINGS

The above and other objects, features and advantages of the present invention will be more apparent from the following description of the preferred embodiments in conjunction with the accompanying drawings, in which:
Fig. 1 is a sectional view showing a material holding apparatus, not according to the present invention, which is equipped with a chuck having a stationary configuration and incorporated into a spindle of an automatic lathe, wherein an actuating member is located at an opening-operation position;
Fig. 2 is a sectional view showing the material holding apparatus of Fig. 1, which is equipped with the chuck having the stationary configuration, wherein the actuating member is located at a closing-operation position;
Fig. 3 is a sectional view showing the material holding apparatus of Fig. 1, which is equipped with a chuck having a moving configuration, wherein the actuating member is located at the opening-operation position;
Fig. 4 is a sectional view showing the material holding apparatus of Fig. 1, which is equipped with the chuck having the moving configuration, wherein the actuating member is located at the closing-operation position;
Fig. 5A is a sectional view of the chuck having the stationary configuration, provided in the material holding apparatus of Fig. 1;
Fig. 5B is a sectional view of the chuck having the moving configuration, provided in the material holding apparatus of Fig. 1;
Fig. 6 is a sectional view showing the material holding apparatus of Fig. 1, which is equipped with the chuck having the stationary configuration, wherein the actuating member is located at an intermediate position;
Fig. 7 is a sectional view showing the material holding apparatus of Fig. 1, which is equipped with the chuck having the moving configuration, wherein the actuating member is located at the intermediate position;
Fig. 8 is a sectional view showing a material holding apparatus, according to an embodiment of the present invention, which is equipped with a chuck having a stationary configuration and incorporated into a spindle of an automatic lathe, wherein an actuating member is located at an opening-operation position;
Fig. 9 is a sectional view showing the material holding apparatus of Fig. 8, which is equipped with the chuck having the stationary configuration, wherein the actuating member is located at a closing-operation position;
Fig. 10 is a sectional view showing the material holding apparatus of Fig. 8, which is equipped with a chuck having a moving configuration, wherein the actuating member is located at the opening-operation position;
Fig. 11 is a sectional view showing the material holding apparatus of Fig. 8, which is equipped with the chuck having the moving configuration, wherein the actuating member is located at the closing-operation position;
Fig. 12 is a sectional view showing the material holding apparatus of Fig. 8, which is equipped with the chuck having the stationary configuration, wherein the actuating member is located at an intermediate position;
Fig. 13 is a sectional view showing the material holding apparatus of Fig. 8, which is equipped with the chuck having the moving configuration, wherein the actuating member is located at the intermediate position;
Fig. 14 is a sectional view showing a material guiding apparatus, according to an embodiment of the present invention, which is equipped with a guide bush having a stationary configuration and incorporated with a spindle of an automatic lathe, wherein an actuating member is located at an opening-operation position;
Fig. 15 is a sectional view showing the material guiding apparatus of Fig. 14, which is equipped with the guide bush having the stationary configuration, wherein the actuating member is located at a closing-operation position;
Fig. 16 is a sectional view showing the material guiding apparatus of Fig. 14, which is equipped with a guide bush having a moving configuration, wherein the actuating member is located at the opening-operation position;
Fig. 17 is a sectional view showing the material guiding apparatus of Fig. 14, which is equipped with the guide bush having the moving configuration, wherein the actuating member is located at the closing-operation position;
Fig. 18 is a sectional view showing the material guiding apparatus of Fig. 14, which is equipped with the guide bush having the stationary configuration, wherein the actuating member is located at a second closing-operation position; and
Fig. 19 is a sectional view showing the material guiding apparatus of Fig. 14, which is equipped with the chuck having the moving configuration, wherein the actuating member is located at the second closing-operation position.

### BEST MODE FOR CARRYING OUT THE INVENTION

The embodiments of the present invention are described below, in detail, with reference to the accompanying drawings. In the drawings, same or similar components are denoted by common reference numerals.

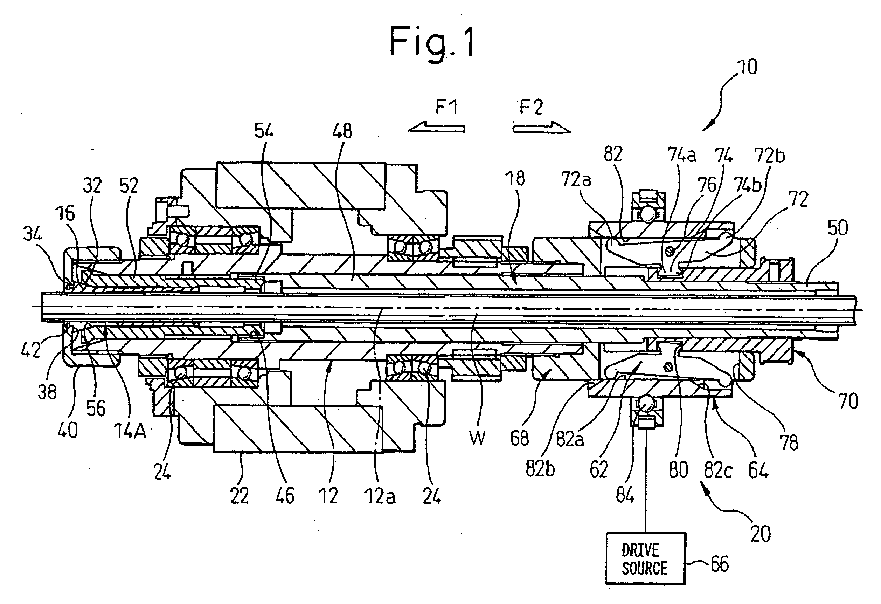

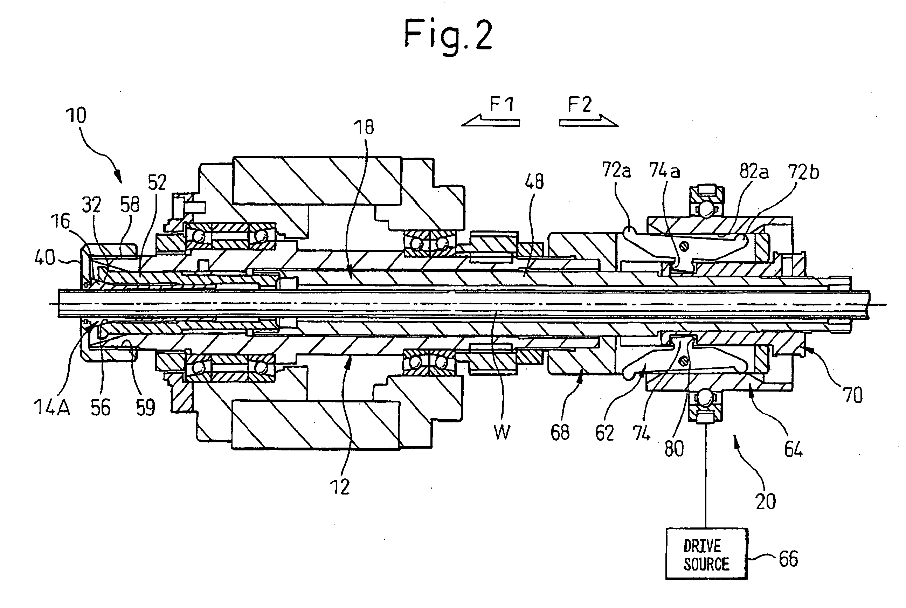

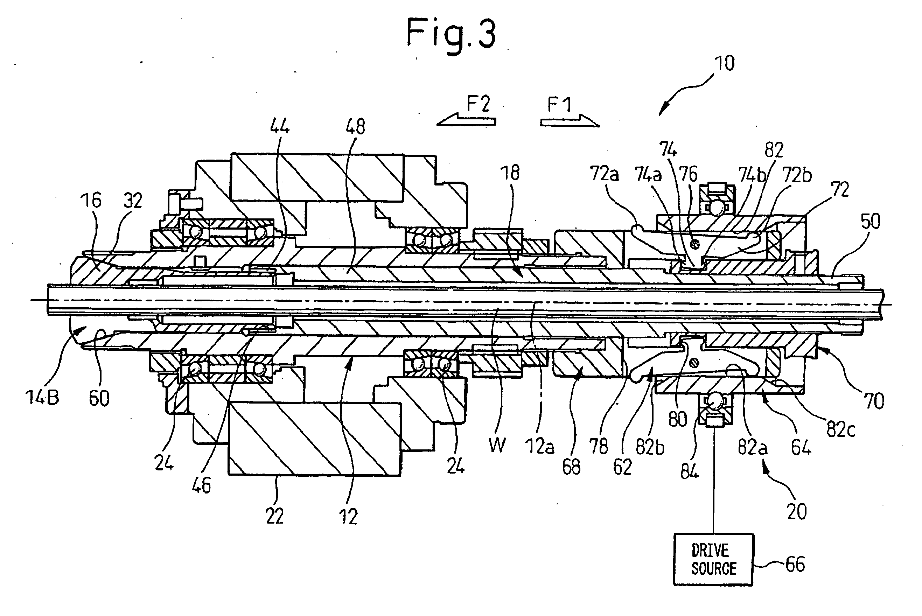

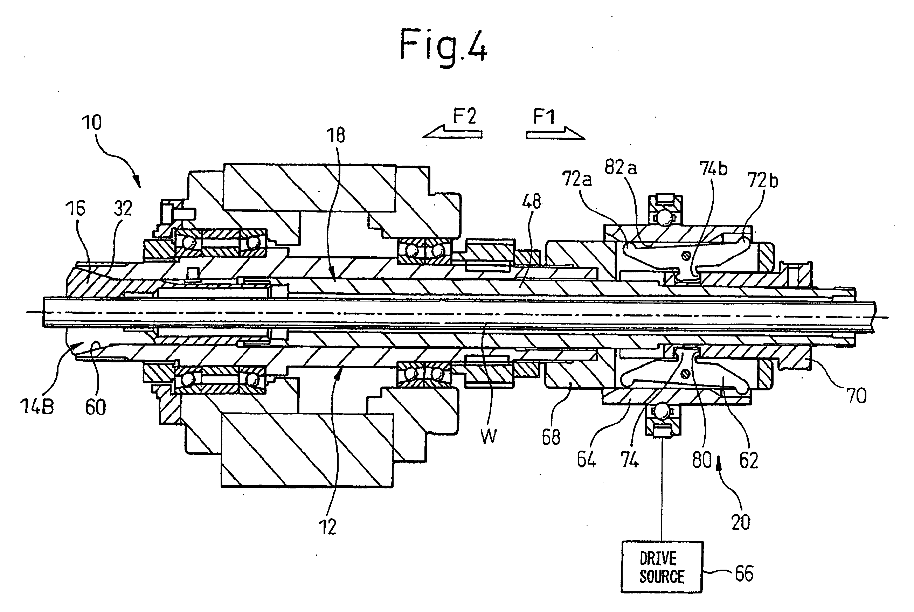

Referring to the drawings, Figs. 1 to 4 are diagrams showing a material holding apparatus 10 not according to the present invention, which is incorporated into a main spindle 12 of an automatic lathe, wherein Figs. 1 and 2 show the material holding apparatus 10 equipped with a chuck 14A having a stationary configuration, and Figs. 3 and 4 show the material holding apparatus 10 equipped with a chuck 14B having a moving configuration. The material holding apparatus 10 includes a tubular or cylindrical chuck 14 (generally denoting the chucks 14A and 14B) having a holding section 16 capable of opening and closing, an actuating member 18 for actuating the holding section 16 of the chuck 14 to open or close, and a driving mechanism 20 for making the actuating member 18 move between a closing-operation position allowing the holding section 16 to securely hold a material to be machined (or a workpiece) W under a pressing force (Figs. 2 and 4) and an opening-operation position relieving the pressing force and allowing the holding section 16 to release the workpiece W (Figs. 1 and 3).

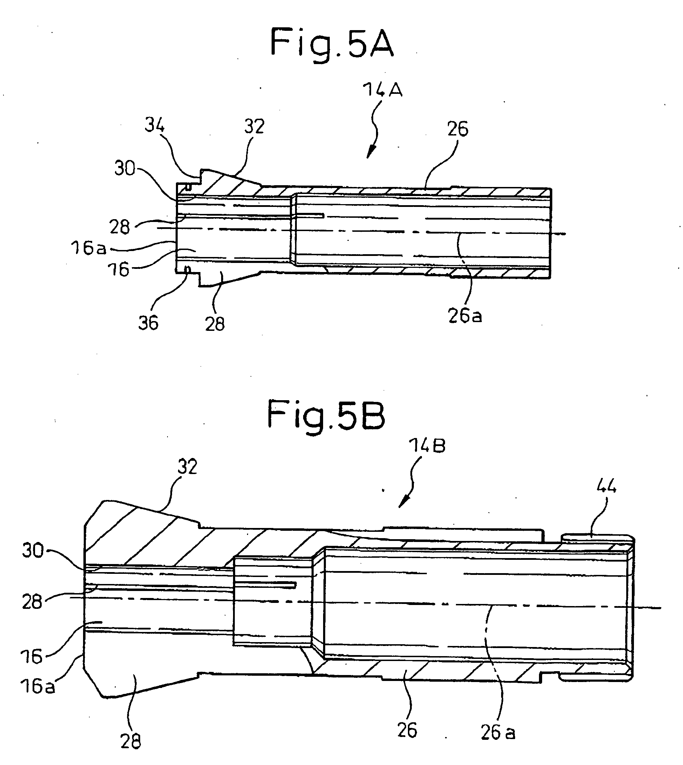

The driving mechanism 20 can generate both a normal driving force F1 for making the actuating member 18 move from the opening-operation position to the closing-operation position and a reverse driving force F2 for making the actuating member 18 move from the closing-operation position to the opening-operation position, and also can selectively apply either one of the normal driving force F1 and the reverse driving force F2 to the actuating member 18. According to this arrangement, the material holding apparatus 10 can be provided, in an interchangeable manner, with both of the chuck 14A having the stationary configuration (Fig. 5A) adapted to receive the pressing force on the holding section 16 in a stationary state of the chuck during a period when the actuating member 18 moves from the opening-operation position to the closing-operation position, and the chuck 14B having the moving configuration (Fig. 5B) adapted to receive the pressing force on the holding section 16 in a moving state of the chuck moving together with the actuating member 18 during a period when the actuating member 18 moves from the opening-operation position to the closing-operation position. The configuration of the driving mechanism 20 and the resultant interchangeability of the chucks 14A and 14B will be described later in detail.

The spindle 12, formed from a hollow tubular or cylindrical element having a central axis 12a, is rotatably mounted on a spindle stock 22 of the automatic lathe through a bearing unit 24 and connected with a rotational drive source (not shown) such as a servo-motor (Figs. 1 and 3). In a turning process, a bar-shaped workpiece W (hereinafter referred to as a bar W) is fed from a rear end (a right end, in the drawings) of the spindle 12 into an interior of the spindle in an axial direction, and the spindle 12 is driven for rotation about the axis 12a by the rotational drive source in a state where the bar W is firmly and securely held in the chuck 14 by the actuation of the actuating member 18 as described later. In this connection, the spindle 12 acts as a tubular or cylindrical support member (i.e., one component of the material holding apparatus 10) that accommodates and supports the actuating member 18 of the material holding apparatus 10 in a relatively movable manner in the axial direction.

The chuck 14 (14A and 14B), formed from a hollow tubular or cylindrical element capable of receiving therein the bar W fed to the spindle 12, includes, in an integral or unitary manner, a tubular body 26 having a central axis 26a, and the elastically deformable holding section 16 provided coaxially and adjacent to the tubular body 26 in the axial direction (Figs. 5A and 5B). The holding section 16 of the chuck 14 is provided with a plurality of (three, in the illustrated embodiment) slits 28 formed therein and axially extending from the axial front-end face 16a of the section over a desired length, so as to provide the holding section 16 with a slotted structure capable of elastically changing its inner diameter relative to the central axis 26a of the tubular body 26.

Further, the holding section 16 of the chuck 14 is provided with a substantially cylindrical bar holding surface 30, as an inner circumferential surface of the slotted structure, which has a diameter smaller than the inner circumferential surface of the tubular body 26, and a truncated-conical pressure receiving surface 32, as an outer circumferential surface of the slotted structure, which extends to gradually increase its outer diameter from the outer circumferential surface of the tubular body 26. When the pressure receiving surface 32 uniformly receives the pressing force in a radially inward direction, the holding section 16 elastically bends from an initial open position to reduce the diameter of the bar holding surface 30, so as to firmly and fixedly hold the bar W on the bar holding surface 30. When the pressing force to the pressure receiving surface 32 is relieved, the holding section 16 elastically restores to the open position to increase the diameter of the bar holding surface 30, so as to release the bar W from the holding section 16.

The chuck 14A having the stationary configuration (Fig. 5A), configured to exhibit a holding force by the displacement of the actuating member 18 in the spindle 12 in a push-out direction (a leftward direction, in Fig. 1), is provided with an abutting surface 34 formed adjacent to a large-diameter end (a left end, in the drawings) of the pressure receiving surface 32 of the holding section 16 and annularly extending substantially orthogonally to the central axis 26a of the tubular body 26. The chuck 14A is also provided with an annular groove 36 recessed along an outer circumferential surface of an extension axially extending from the abutting surface 34.

In the case where the material holding apparatus 10 is equipped with the chuck 14A having the stationary configuration, an annular cap 40 having inside thereof an anchoring surface 38 capable of being engaged with the abutting surface 34 of the chuck 14A is detachably attached to a front end (a left end, in Fig. 1) of the spindle 12. Further, the chuck 14A is connected to the cap 40 through an annular stopper 42 fitted in the annular groove 36 in a relatively immovable manner in the axial direction and a relatively movable manner in the radial direction.

As described later, when the chuck 14A is properly accommodated in the spindle 12 and the cap 40 is attached to the front end of the spindle 12, the abutting surface 34 of the chuck 14A tightly abuts against the anchoring surface 38 of the cap 40, so that the chuck 14A can be prevented from being pushed out and detached from the spindle 12 during a period when the actuating member 18 moves from the opening-operation position to the closing-operation position. Further, during a period when the actuating member 18 moves from the closing-operation position to the opening-operation position, the annular stopper 42 acts to prevent the chuck 14A from being drawn into the spindle 12 together with the actuating member 18, which otherwise may cause an improper opening. Such drawing may occur due to the fact that the chuck 14A acts like a wedge between the bar W and the actuating member 18 during a period when the actuating member 18 is located at the closing-operation position, and the annular stopper 42 reliably prevents this undesirable drawing.

The chuck 14B having the moving configuration (Fig. 5B), configured to exhibit a holding force by the displacement of the actuating member 18 in the spindle 12 in a draw-in direction (a rightward direction, in Fig. 3), is provided with an external thread 44 formed on its outer circumferential surface and adjacent to an axial rear end (a right end, in the drawings) of the tubular body 26. In the case where the material holding apparatus 10 is equipped with the chuck 14B having the moving configuration, the external thread 44 is screwed into an internal thread 46 (Fig. 3) provided in the actuating member 18 as described later, so that the chuck 14B is detachably attached to the actuating member 18. As described later, when the chuck 14B is properly accommodated in the spindle 12 and joined to the actuating member 18, the chuck 14B can axially move in the spindle 12 while integrally following the axial movement of the actuating member 18.

The actuating member 18 includes a first tubular element 48 adapted to selectively receive one of the normal driving force F1 and the reverse driving force F2 from the driving mechanism 20 (Figs. 1 and 3). The first tubular element 48 is a hollow tubular element capable of receiving, in a non-contact manner, the bar W fed to the spindle 12, and the above-described internal thread 46, capable of being screwed on the external thread 44 of the chuck 14B having the moving configuration, is formed at an axial front end (a left end, in the drawings) of the first tubular element 48. The first tubular element 48 is axially movably and coaxially accommodated in the spindle 12, and a predetermined length portion 50 at an axial rear side (at a right side, in the drawings) of the element protrudes outside from a rear-end opening of the spindle 12.

The actuating member 18 also includes a second tubular element 52 adapted to receive and support the chuck 14A having the stationary configuration relatively movably in the axial direction (Fig. 1). The second tubular element 52 is a hollow tubular element capable of receiving, similarly in a non-contact manner, the bar W received in the first tubular element 48, and an external thread 54, capable of being screwed into the internal thread 46 of the first tubular element 48, is formed at an axial rear end (a right end, in the drawings) of the second tubular element 52. In other words, the external thread 54 of the second tubular element 52 is configured to be identical to the external thread 44 of the chuck 14B having the moving configuration. Therefore, the second tubular element 52 can be exchanged with the chuck 14B having the moving configuration and detachably attached to the first tubular element 48 in an axially aligned manner.

The second tubular element 52 axially slidably accommodates, at a coaxial location, the tubular body 26 of the chuck 14A having the stationary configuration in an axial frontward region (a leftward region, in the drawings) of the element. In an annular region of an inner circumferential surface of the second tubular element 52, which defines a front-end opening of the second tubular element 52, there is formed a truncated-conical working surface 56 capable of engaging with the pressure receiving surface 32 provided in the holding section of the chuck 14A (Fig. 1). The working surface 56 extends axially rearward from the front end of the second tubular element 52 so as to gradually reduce its diameter. An inner diameter at the large-diameter end of the working surface 56 is slightly smaller than an outer diameter at the large-diameter end of the pressure receiving surface 32 of the holding section 16 in the opening state of the chuck 14A, and therefore the working surface 56 constitutes a pressure applying surface adapted to be abutted against the pressure receiving surface 32 in at least an annular area.

In the case where the material holding apparatus 10 is equipped with the chuck 14A having the stationary configuration, the second tubular element 52 of the actuating member 18 is attached to the first tubular element 48 by screwing the external thread 54 into the internal thread 46, and thereafter the tubular body 26 of the chuck 14A connected with the cap 40 through the annular stopper 42 is inserted into an interior or lumen of the second tubular element 52. Then, the cap 40 is attached to the spindle 12 by, for example, screwing an external thread 58 provided at the front end of the spindle 12 into an internal thread 59 provided at the rear end of the cap 40 (Fig. 2).

When the chuck 14A having the stationary configuration is thus properly installed in the material holding apparatus 10, the chuck 14A and the actuating member 18 (i.e., the first tubular element 48 and the second tubular element 52) are disposed coaxially with respect to the spindle 12, and during a period when the actuating member 18 axially moves in the spindle 12, the chuck 14A is kept in a stationary or immovable state in the axial direction in the spindle 12. In this connection, detents having a well-known structure are provided between the spindle 12 and the second tubular element 52 and between the second tubular element 52 and the chuck 14A, so that the chuck 14A and the actuating member 18 can rotate integrally with the spindle 12.

On the other hand, in the case where the material holding apparatus 10 is equipped with the chuck 14B having the moving configuration, it is sufficient to attach the chuck 14B to the first tubular element 48 of the actuating member 18 by screwing the external thread 44 into the internal thread 46. In other words, when the chuck 14B having the moving configuration is installed, the second tubular element 52 of the actuating member 18 is not used, and the tubular body 26 of the chuck 14B having the moving configuration is coaxially accommodated in the axial frontward region (the leftward region, in the drawings) of the spindle (i.e., the support member) 12 in an axially slidable manner.

The spindle 12 is provided, in an annular region of an inner circumferential surface thereof, defining a front-end opening of the spindle 12, with a truncated-conical working surface 60 capable of engaging with the pressure receiving surface 32 provided in the holding section 16 of the chuck 14B (Fig. 3). The working surface 60 extends axially rearward from the front end of the spindle 12 so as to gradually reduce its diameter. An inner diameter at the large-diameter end of the working surface 60 is slightly smaller than an outer diameter at the large-diameter end of the pressure receiving surface 32 of the holding section 16 in the opening state of the chuck 14B, and therefore the working surface 60 constitutes a pressure applying surface adapted to be abutted against the pressure receiving surface 32 in at least an annular area.

When the chuck 14B having the moving configuration is thus properly installed in the material holding apparatus 10, the chuck 14B and the actuating member 18 (i.e., the first tubular element 48) are disposed coaxially with respect to the spindle 12 and, during a period when the actuating member 18 axially moves in the spindle 12, the chuck 14B also moves together with the actuating member 18 in the axial direction. In this connection, a detent having a well-known structure is provided between the spindle 12 and the chuck 14B, so that the chuck 14B and the actuating member 18 can rotate integrally with the spindle 12.

Due to the above-described configuration of the actuating member 18, it is possible for the material holding apparatus 10 to be equipped with either one of the chuck 14A having the stationary configuration and the chuck 14B having the moving configuration in an suitably interchangeable manner. In this connection, as already described, the chuck 14A having the stationary configuration meets the actuating-member pushing-type structure and the chuck 14B having the moving configuration meets the actuating-member drawing-type structure. In this regard, if a configuration is adopted, in which an operation of the actuating member for opening the chuck is implemented by an elastic biasing force of a return spring, as in the chuck actuating mechanism in the material holding apparatus, for example, described in JP-B-2566570 as already indicated, it may be predicted that, when the chuck having the stationary configuration and the chuck having the moving configuration are interchanged with each other without changing the chuck actuating mechanism, the driving force on the actuating member for closing the chuck is depending on the elastic biasing force of the return spring with regard to either one of the chucks, and therefore it becomes difficult to stably obtain a necessary holding force.

Considering the above matter, in the material holding apparatus 10 according to the present invention, the driving mechanism 20 is configured so as to be able to generate both the normal driving force F1 for making the actuating member 18 move from the opening-operation position (i.e., the position where the chuck 14 securely holds the workpiece) to the closing-operation position (i.e., the position where the chuck 14 releases the workpiece) and the reverse driving force F2 for making the actuating member 18 move from the closing-operation position to the opening-operation position, and also able to selectively apply either one of the normal driving force F1 and the reverse driving force F2 to the actuating member 18, as already described.

Thus, in contrast to a driving mechanism using a return spring that, during a period when the driving force is generated in one direction, always generates a reaction force against the driving force, the driving mechanism 20 selectively applying one of the normal driving force F1 and the reverse driving force F2 to the actuating member 18 can reliably exhibit, for either of the chuck 14A having the stationary configuration and the chuck 14B having the moving configuration, the normal driving force F1 for moving the actuating member 18 from the opening-operation position to the closing-operation position (the driving force F1 acting in reverse directions relative to the chuck 14A and the chuck 14B). As a result, when the chucks 14A and 14B are interchanged with each other without changing the driving mechanism 20, it is possible to stably obtain the necessary holding force for either of the chucks 14A and 14B.

The configuration of the driving mechanism 20 will be described in detail below, with reference to Fig. 1.

The driving mechanism 20 includes a bidirectional driving member 62 having a rockable or pivotable structure, which selectively applies one of the normal driving force F1 and the reverse driving force F2 to the first tubular element 48 of the actuating member 18, a linearly-movable member 64 that moves linearly relative to the bidirectional driving member 62 to allow the bidirectional driving member 62 to selectively exhibit one of the normal driving force F1 and the reverse driving force F2, and a drive source 66 that makes the linearly-movable member 64 reciprocate in directions along an axis of the first tubular element 48 (the axis coinciding with the axis 12a of the spindle 12).

A tubular mount member 68 is securely provided at the rear end of the spindle 12 so as to surround the protruding length portion 50 of the first tubular element 48 of the actuating member 18, and the bidirectional driving member 62 and the linearly-movable member 64 are carried on the mount member 68 in rockable and linearly movable manners, respectively. Further, on the protruding length portion 50 of the first tubular element 48 of the actuating member 18, a tubular transmission member 70 is securely provided at a position such as to be partially surrounded by the mount member 68, the transmission member 70 being engaged with the bidirectional driving member 62 to transmit the driving force thereof to the first tubular element 48.

The bidirectional driving member 62 is a generally Y-shaped lever element including an arm 72 defining points of force at opposite ends 72a, 72b thereof and a projection 74 projecting on one lateral side generally at the center of the arm 72 and defining points of application at a pair of tips 74a, 74b thereof. The bidirectional driving member 62 is rotatably attached to the mount member 68 through a support shaft 76 as a fulcrum disposed at the center of the arm 72. The mount member 68 secured to the spindle 12 is provided with a plurality of (two, in the illustrated embodiment) cavities 78 radially penetrating therethrough, and a plurality of bidirectional driving members 62 are rockably or pivotably accommodated one by one in the respective cavities 78.

Each bidirectional driving member 62 is disposed in such a manner that the arm 72 is oriented in parallel with the axis of the first tubular element 48 (i.e., the axis 12a of the spindle 12) and the projection 74 faces nearer to the first tubular element 48. Further, each bidirectional driving member 62 is arranged in such a manner that, in response to the rocking or pivoting movement thereof, at least one of the ends 72a, 72b of the arm 72 protrudes radially outward from the cavity 78 of the mount member 68, and either one of the ends 72a or 72b is completely drawn or accommodated in the cavity 78.

On the other hand, the transmission member 70, secured to the protruding length portion 50 of the first tubular element 48, is provided with recesses 80 opening radially outwardly and formed respectively at positions corresponding to the cavities 78 of the mount member 68. The transmission member 70 receives in each recess 80 thereof in a displaceable manner the projection 74 of the bidirectional driving member 62 accommodated in the corresponding cavity 78. When the bidirectional driving member 62 operates to rock or pivot in the cavity 78, either one of the tips 74a or 74b of the projection 74 abuts against a wall face of the recess 80 of the transmission member 70, so that the driving force (the normal driving force F1 and the reverse driving force F2) that is proportional to a rocking or pivoting force is selectively applied in the direction along the axis 12a of the spindle 12.

The linearly-movable member 64 is a hollow tubular member supported in an axially reciprocative manner along the outer surface of the mount member 68, and is provided on the inner surface of the linearly-movable member with a tubular cam surface 82 having an inner diameter varying along the axial direction. More specifically, the cam surface 82 has a flat major surface portion 82a with the inner diameter thereof maintained in constant over a predetermined length at an axially intermediate part, a first flat tapered surface portion 82b with the inner diameter thereof gradually increasing toward an axial front end (a left end, in the drawings) from the major surface portion 82a, and a second flat tapered surface portion 82c with the inner diameter thereof gradually increasing toward an axial rear end (a right end, in the drawings) from the major surface portion 82a. The cam surface 82 of the linearly-movable member 64 is disposed in such a manner as to annularly surround the mount member 68 and evenly face to all of the cavities 78, and to be slidably engaged with at least one of the ends 72a, 72b of the arms 72 of the respective bidirectional driving members 62.

The linearly-movable member 64 is connected to the drive source 66 in a relatively rotatable manner through a bearing unit 84. The drive source 66 is composed of a hydraulic power unit, a cam mechanism, a servo-motor and the like, and makes the linearly-movable member 64 axially move in a predetermined reciprocation range, under the control of a controller (not shown), along the outer circumferential surface of the mount member 68 secured to the spindle 12.

As the linearly-movable member 64 linearly moves along the mount member 68, engagement positions between the cam surface 82 and the opposite ends 72a, 72b of the arm 62 of each of the bidirectional driving members 62 are shifted in the axial direction, so that each bidirectional driving member 62 operates to convert the linear movement of the linearly-movable member 64 into the above-described rocking or pivoting movement and selectively apply one of the normal driving force F1 and the reverse driving force F2 to the transmission member 70 (i.e., the actuating member 18) by leverage or a lever action. In this connection, since the driving mechanism 20 configured as described above, except for the drive source 66, rotates together with the spindle 12 at high speed, it is preferable that the bidirectional driving members 62, the linearly-movable member 64, the mount member 68 and the transmission member 70 are disposed about the axis 12a of the spindle 12 in a well-balanced manner.

An operation for holding and releasing the bar, in the material holding apparatus 10 having the above configuration, will be described below with reference to Figs. 1 to 4.

In the case where the material holding apparatus 10 is equipped with the chuck 14A having the stationary configuration (Figs. 1 and 2), the linearly-movable member 64 of the driving mechanism 20 is first disposed at the front end (the left end, in the drawings) in the reciprocation range on the mount member 68, before the bar W is fed to the spindle 12. In this state, each of the bidirectional driving members 62 is disposed in such a manner that the front end 72a of the arm 72 is engaged with the major surface portion 82a of the cam surface 82 of the linearly-movable member 64 and the rear end 72b of the arm 72 is spaced rearward from the cam surface 82 (Fig. 1).

In this rocked or pivoted position, the projection 74 of each bidirectional driving member 62 is abutted at the rear-side tip 74b thereof against the wall face of the recess 80 of the transmission member 70, so as to apply an axially rearward driving force (i.e., the reverse driving force F2) to the transmission member 70. The transmission member 70 transmits the reverse driving force F2 to the first tubular element 48 of the actuating member 18, and thereby the first tubular element 48 is disposed integrally with the second tubular element 52 at the rear end in the axial movement range thereof inside the spindle 12. As a result, the actuating member 18 is disposed at the opening-operation position, and the holding section 16 of the chuck 14A opens.

In the state where the chuck 14A opens (Fig. 1), the bar W is fed to the interior of the actuating member 18 from the rear side of the spindle 12, until the desired length of the leading end of the bar W protrudes from the front end opening of the holding section 16 of the chuck 14A. From this state, the drive source 66 of the driving mechanism 20 is activated, so as to make the linearly-movable member 64 move axially rearward along the outer circumferential surface of the mount member 68. Thus, the front end 72a of the arm 72 of each bidirectional driving member 62 is disengaged from the major surface portion 82a of the cam surface 82, and simultaneously the rear end 72b of the arm 72 of each bidirectional driving member 62 is brought into engagement with the major surface portion 82a through the second tapered surface portion 82c of the cam surface 82. While accompanying therewith, the respective bidirectional driving members 62 rock or pivot synchronously with each other, from the rocked position shown in Fig. 1, in a direction allowing the rear ends 72b of the arms 72 to be drawn into the cavities 78 of the mount member 68.

As a result of this rocking or pivoting movement, the projection 74 of each bidirectional driving member 62 is abutted at the front-side tip 74a thereof against the wall face of the recess 80 of the transmission member 70, so as to apply an axially frontward driving force (i.e., the normal driving force F1) to the transmission member 70 by leverage or a lever action. The transmission member 70 transmits the normal driving force F1, as it is, to the first tubular element 48 of the actuating member 18, and thereby the first tubular element 48 moves integrally with the second tubular element 52 in an axial frontward direction inside the spindle 12.

When the actuating member 18 moves from the opening-operation position to the closing-operation position in the above-described manner, since the chuck 14A is arranged axially immovably relative to the spindle 12 by using the cap 40 as already described, the working surface 56 of the second tubular element 52 of the actuating member 18 is accurately pressed against the pressure receiving surface 32 of the chuck 14A, so as to apply a required pressing force to the pressure receiving surface 32. As a result, the holding section 16 of the chuck 14A elastically reduces its diameter as already described and, at an instant when the actuating member 18 reaches the closing-operation position, the chuck 14A firmly and securely holds the bar W at the bar holding surface 30 (Fig. 5A) thereof by a required holding force (Fig. 2). In this state, the spindle 12 rotates to perform a desired turning operation for the bar W.

In order to make the chuck 14A open to release the bar W, the drive source 66 is activated again, so as to make the linearly-movable member 64 move axially frontward along the outer circumferential surface of the mount member 68. Thus, the rear end 72b of the arm 72 of each bidirectional driving member 62 is disengaged from the major surface portion 82a of the cam surface 82, and simultaneously the front end 72a of the arm 72 of each bidirectional driving member 62 is brought into engagement with the major surface portion 82a through the first tapered surface portion 82b of the cam surface 82. While accompanying therewith, the respective bidirectional driving members 62 rock or pivot synchronously with each other, from the rocked position shown in Fig. 2, in a direction allowing the front ends 72a of the arms 72 to be drawn into the cavities 78 of the mount member 68.

As a result of this rocking or pivoting movement, the projection 74 of each bidirectional driving member 62 is abutted at the rear-side tip 74b thereof against the wall face of the recess 80 of the transmission member 70, so as to apply an axially rearward driving force (i.e., the reverse driving force F2) to the transmission member 70 by leverage or a lever action. The transmission member 70 transmits the reverse driving force F2, as it is, to the first tubular element 48 of the actuating member 18, and thereby the first tubular element 48 moves integrally with the second tubular element 52 in an axial rearward direction inside the spindle 12.

When the actuating member 18 moves from the closing-operation position to the opening-operation position in the above-described manner, since the chuck 14A is arranged axially immovably relative to the spindle 12 by using the annular stopper 42 engaged with the cap 40 as already described, the working surface 56 of the second tubular element 52 of the actuating member 18 is surely and reliably disengaged from the pressure receiving surface 32 of the chuck 14A. As a result, the pressing force from the working surface 56 of the actuating member 18 to the pressure receiving surface 32 of the chuck 14A is relieved and the holding section 16 of the chuck 14A elastically increases its diameter as already described and, at an instant when the actuating member 18 reaches the opening-operation position, the chuck 14A completely releases the bar W (Fig. 1).

On the other hand, in the case where the material holding apparatus 10 is equipped with the chuck 14B having the moving configuration (Figs. 3 and 4), the linearly-movable member 64 of the driving mechanism 20 is first disposed at the rear end (the right end, in the drawings) in the reciprocation range on the mount member 68, before the bar W is fed to the spindle 12. In this state, each of the bidirectional driving members 62 is disposed in such a manner that the rear end 72b of the arm 72 is engaged with the major surface portion 82a of the cam surface 82 of the linearly-movable member 64 and the front end 72a of the arm 72 is spaced frontward from the cam surface 82 (Fig. 3).

In this rocked or pivoted position, the projection 74 of each bidirectional driving member 62 is abutted at the front-side tip 74a thereof against the wall face of the recess 80 of the transmission member 70, so as to apply an axially frontward driving force (i.e., the reverse driving force F2) to the transmission member 70. The transmission member 70 transmits the reverse driving force F2 to the first tubular element 48 of the actuating member 18, and thereby the first tubular element 48 is disposed integrally with the chuck 14B at the front end in the axial movement range thereof inside the spindle 12. As a result, the actuating member 18 is disposed at the opening-operation position and the holding section 16 of the chuck 14B is opened.

In a state in which the chuck 14B opens (Fig. 3), the bar W is fed to the interiors of the spindle 12 and the actuating member 18 from the rear side of the spindle 12, until the desired length of the leading end of the bar W protrudes from the front end opening of the holding section 16 of the chuck 14B. From this state, the drive source 66 of the driving mechanism 20 is activated, so as to make the linearly-movable member 64 move axially frontward along the outer circumferential surface of the mount member 68. Thus, the rear end 72b of the arm 72 of each bidirectional driving member 62 is disengaged from the major surface portion 82a of the cam surface 82, and simultaneously the front end 72a of the arm 72 of each bidirectional driving member 62 is brought into engagement with the major surface portion 82a through the first tapered surface portion 82b of the cam surface 82. While accompanying therewith, the respective bidirectional driving members 62 rock or pivot synchronously with each other, from the rocked position shown in Fig. 3, in a direction allowing the front ends 72a of the arms 72 to be drawn into the cavities 78 of the mount member 68.

As a result of this rocking or pivoting movement, the projection 74 of each bidirectional driving member 62 is abutted at the rear-side tip 74b thereof against the wall face of the recess 80 of the transmission member 70, so as to apply an axially rearward driving force (i.e., the normal driving force F1) to the transmission member 70 by leverage or a lever action. The transmission member 70 transmits the normal driving force F1, as it is, to the first tubular element 48 of the actuating member 18, and thereby the first tubular element 48 moves integrally with the chuck 14B in an axial rearward direction inside the spindle 12.

When the actuating member 18 moves from the opening-operation position to the closing-operation position in the above-described manner, the chuck 14B is drawn into the spindle 12 by the actuating member 18 and the pressure receiving surface 32 of the chuck 14B is accurately pressed against the working surface 60 of the spindle 12, so that a required pressing force is applied to the pressure receiving surface 32. As a result, the holding section 16 of the chuck 14B elastically reduces its diameter as already described and, at an instant when the actuating member 18 reaches the closing-operation position, the chuck 14B firmly and securely holds the bar W at the bar holding surface 30 (Fig. 5B) thereof by a required holding force (Fig. 4). In this state, the spindle 12 rotates to perform a desired turning operation for the bar W.

In order to make the chuck 14B open to release the bar W, the drive source 66 is activated again, so as to make the linearly-movable member 64 move axially rearward along the outer circumferential surface of the mount member 68. Thus, the front end 72a of the arm 72 of each bidirectional driving member 62 is disengaged from the major surface portion 82a of the cam surface 82, and simultaneously the rear end 72b of the arm 72 of each bidirectional driving member 62 is brought into engagement with the major surface portion 82a through the second tapered surface portion 82c of the cam surface 82. While accompanying therewith, the respective bidirectional driving members 62 rock or pivot synchronously with each other, from the rocked position shown in Fig. 4, in a direction allowing the rear ends 72b of the arms 72 to be drawn into the cavities 78 of the mount member 68.

As a result of this rocking or pivoting movement, the projection 74 of each bidirectional driving member 62 is abutted at the front-side tip 74a thereof against the wall face of the recess 80 of the transmission member 70, so as to apply an axially frontward driving force (i.e., the reverse driving force F2) to the transmission member 70 by leverage or a lever action. The transmission member 70 transmits the reverse driving force F2, as it is, to the first tubular element 48 of the actuating member 18, and thereby the first tubular element 48 moves integrally with the chuck 14B in an axial frontward direction inside the spindle 12.

When the actuating member 18 moves from the closing-operation position to the opening-operation position in the above-described manner, the chuck 14B is pushed out from the spindle 12 by the actuating member 18 and the pressure receiving surface 32 of the chuck 14B is surely and reliably disengaged from the working surface 60 of the spindle 12. As a result, the pressing force from the working surface 60 of the spindle 12 to the pressure receiving surface 32 of the chuck 14B is relieved and the holding section 16 of the chuck 14B elastically increases its diameter as already described and, at an instant when the actuating member 18 reaches the opening-operation position, the chuck 14B completely releases the bar W (Fig. 3).

As will be understood from the above, in the material holding apparatus 10, the normal driving force F1 of the driving mechanism 20 for closing the holding section 16 of the chuck 14A having the stationary configuration and the normal driving force F1 of the driving mechanism 20 for closing the holding section 16 of the chuck 14B having the moving configuration are thrust forces applied to the actuating member 18 in directions opposite to each other. Also, the normal driving force F1 of the driving mechanism 20 for closing the holding section 16 of the chuck 14A having the stationary configuration and the reverse driving force F2 of the driving mechanism 20 for opening the holding section 16 of the chuck 14B having the moving configuration are thrust forces applied to the actuating member 18 in a first direction identical to each other (i.e., the axial frontward direction), while the reverse driving force F2 of the driving mechanism 20 for opening the holding section 16 of the chuck 14A having the stationary configuration and the normal driving force F1 of the driving mechanism 20 for closing the holding section 16 of the chuck 14B having the moving configuration are thrust forces applied to the actuating member 18 in a second direction identical to each other (i.e., the axial rearward direction). According to the above-described bidirectional driving characteristics possessed by the driving mechanism 20, in the material holding apparatus 10, it is possible to stably obtain the required holding force in association with either of the chuck 14A having the stationary configuration and the chuck 14B having the moving configuration.

Further, in the material holding apparatus 10, it is possible to selectively establish one of the actuating-member pushing-type structure using the chuck 14A having the stationary configuration and the actuating-member drawing-type structure using the chuck 14B having the moving configuration, only by replacing the chuck 14A together with the cap 40 and the second tubular element 52 by the chuck 14B or vise versa, in a state where the driving mechanism 20 and the first tubular element 48 of the actuating member 18 that receives the driving force from the driving mechanism 20 remain mounted on the spindle 12. Therefore, in the material holding apparatus 10, it is possible to appropriately and easily change the configuration of the chuck actuating mechanism in consideration of a mechanical configuration of the machine tool (or the automatic lathe), material properties of a workpiece to be machined (or the bar W), required machining accuracy and the like. Consequently, it is possible to provide the material holding apparatus 10 as a versatile or multipurpose apparatus, while preventing equipment cost and burdens on operators from increasing.

It should be noted that, in the case where the material holding apparatus 10 installed on the automatic lathe is used with the actuating-member pushing-type structure including the chuck 14A having the stationary configuration, there is an advantage that the machining dimensional accuracy of the bar W in the axial direction can be ensured at a high level, as already described. On the other hand, in the case where the material holding apparatus 10 installed on the automatic lathe is used with the actuating-member drawing-type structure including the chuck 14B having the moving configuration, there is an advantage that stiffness or rigidity in the front end region of the spindle 12 can be ensured, so as to prevent degradation of the rotational accuracy and the resultant degradation of the machining accuracy, as already described.

In the material holding apparatus 10 according to the present invention, the driving mechanism 20 is also be configured to be able to locate the actuating member 18 at an intermediate position between the closing-operation position and the opening-operation position. In this configuration, the drive source 66 of the driving mechanism 20 is controlled to dispose the linearly-movable member 64 at a suitable intermediate position in the reciprocation range thereof on the mount member 68, and either one of the ends 72a, 72b of the arm 72 of each bidirectional driving member 62 is brought into engagement with either one of the first and second tapered surface portions 82b or 82c, so that it is possible to ensure the intermediate position of the actuating member 18.

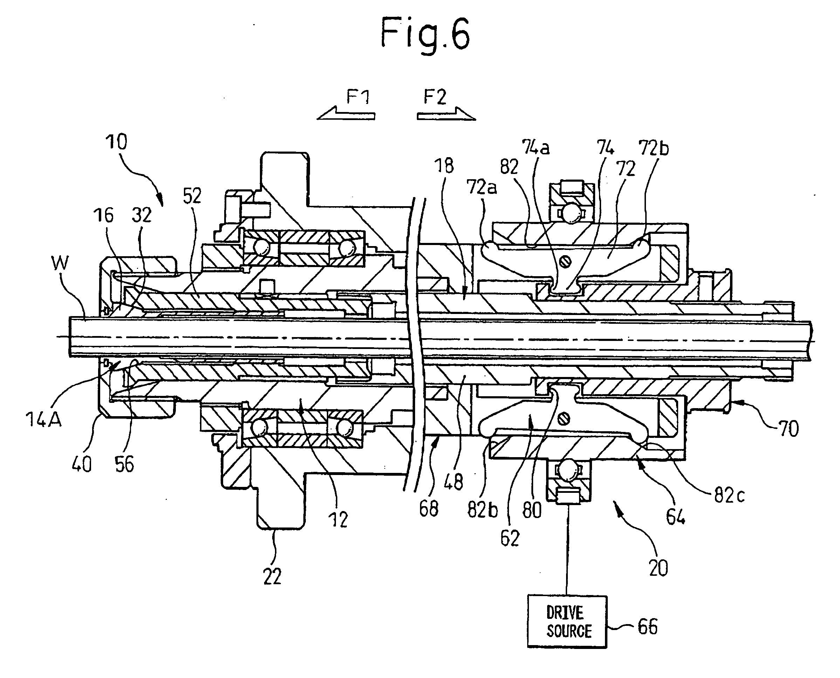

For example, in the case where the material holding apparatus 10 is equipped with the chuck 14A having the stationary configuration, the linearly-movable member 64 passes through a position where the front end 72a of the arm 72 of each bidirectional driving member 62 is disengaged from the cam surface 82 while the rear end 72b of the arm 72 of each bidirectional driving member 62 is engaged with the second tapered surface portion 82c of the cam surface 82, as shown in Fig. 6, during a period when the actuating member 18 is moved from the opening-operation position (Fig. 1) to the closing-operation position (Fig. 2). Therefore, the linearly-movable member 64 is retained at a position defined after the rear end 72b of the arm 72 of each bidirectional driving member 62 has slightly slid along the second tapered surface position 82c of the cam surface 82 and the respective bidirectional driving members 62 have slightly rocked or pivoted synchronously with each other.

As a result of the slight rocking or pivoting movement, each bidirectional driving member 62 applies the axially frontward driving force to the transmission member 70 by the lever action as already described, so that the actuating member 18 (i.e., the first tubular element 48 and the second tubular element 52) slightly moves in the axial frontward direction relative to the chuck 14A inside the spindle 12 and thus reaches the intermediate position. During a period when the actuating member 18 is located at the intermediate position, the working surface 56 of the second tubular element 52 is pressed against the pressure receiving surface 32 of the chuck 14A somewhat lightly, so that the holding section 16 of the chuck 14A holds the bar W under a second pressing force smaller than the above-described required pressing force for allowing the holding section 16 to firmly and securely hold the bar W.

According to the configuration described above, in a case, for example, where the holding force generating in the holding section 16 of the chuck 14A, under the pressing force when the actuating member 18 is located at the closing-operation position, is one which can firmly and securely hold the bar W made of a solid rigid body, but can deform the bar W made of a hollow tubular body or soft material, it is possible to hold the bar W made of the hollow tubular body or soft material without deformation, by the holding force generating in the holding section 16 of the chuck 14A under the smaller second pressing force when the actuating member 18 is disposed at the intermediate position.

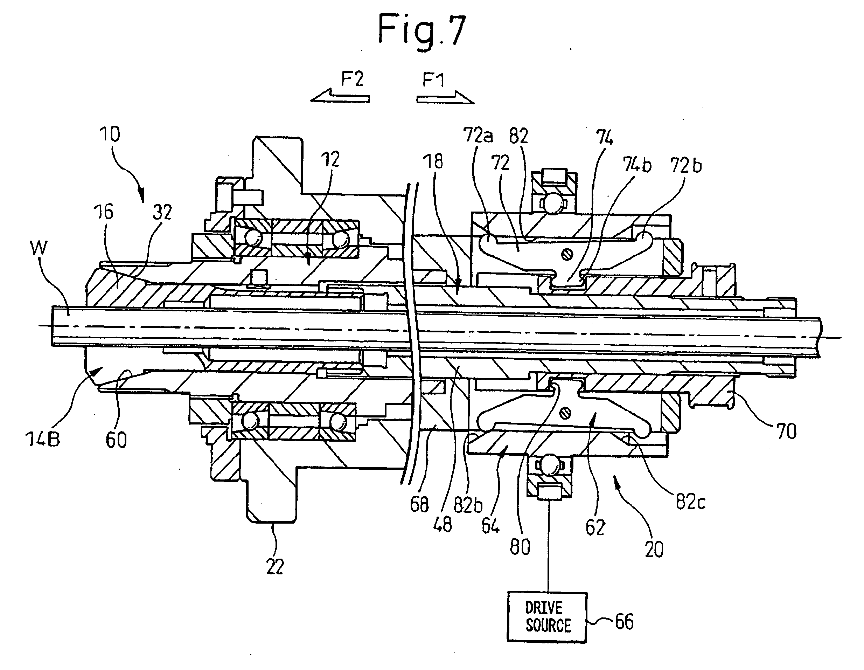

The above operative effects can also be ensured in a similar way in the case where the material holding apparatus 10 is equipped with the chuck 14B having the moving configuration (Fig. 7). In this case, the linearly-movable member 64 passes through a position where the rear end 72b of the arm 72 of each bidirectional driving member 62 is disengaged from the cam surface 82 while the front end 72a of the arm 72 of each bidirectional driving member 62 is engaged with the first tapered surface portion 82b of the cam surface 82, as shown in Fig. 7, during a period when the actuating member 18 is moved from the opening-operation position (Fig. 3) to the closing-operation position (Fig. 4). Therefore, the linearly-movable member 64 is retained at a position defined after the front end 72a of the arm 72 of each bidirectional driving member 62 has slightly slid along the first tapered surface position 82b of the cam surface 82 and the respective bidirectional driving members 62 have slightly rocked or pivoted synchronously with each other.

As a result of the slight rocking or pivoting movement, each bidirectional driving member 62 applies the axially rearward driving force to the transmission member 70 by the lever action as already described, so that the actuating member 18 (i.e., the first tubular element 48) slightly moves together with the chuck 14B in the axial rearward direction inside the spindle 12 and thus reaches the intermediate position. During a period when the actuating member 18 is located at the intermediate position, the pressure receiving surface 32 of the chuck 14B is pressed against the working surface 60 of the spindle 12 somewhat lightly, so that the holding section 16 of the chuck 14B holds the bar W under a second pressing force smaller than the above-described required pressing force for allowing the holding section 16 to firmly and securely hold the bar W.

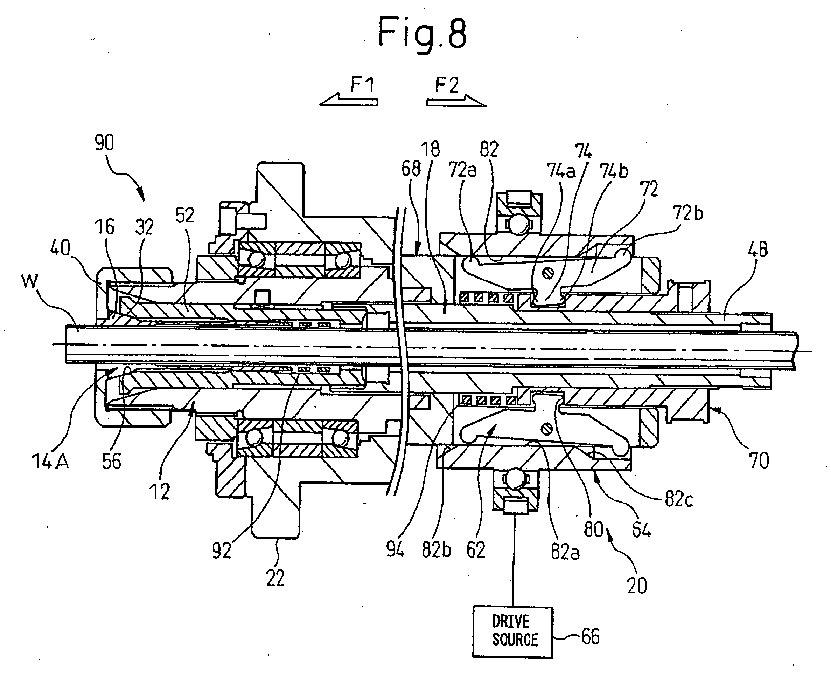

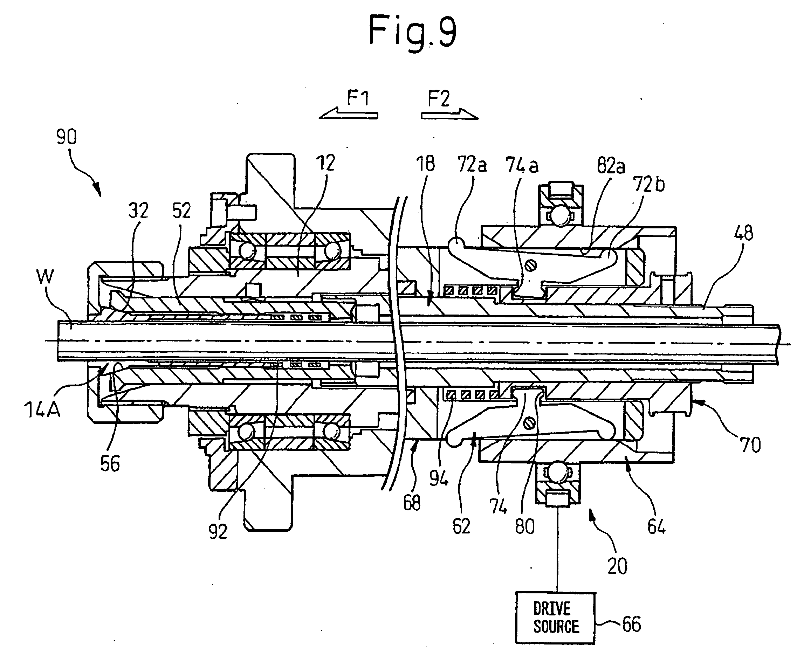

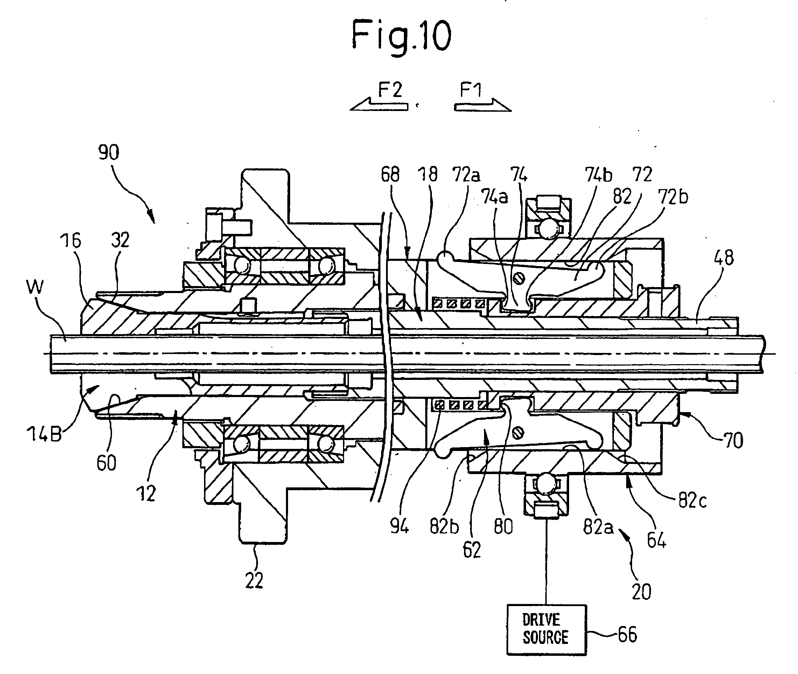

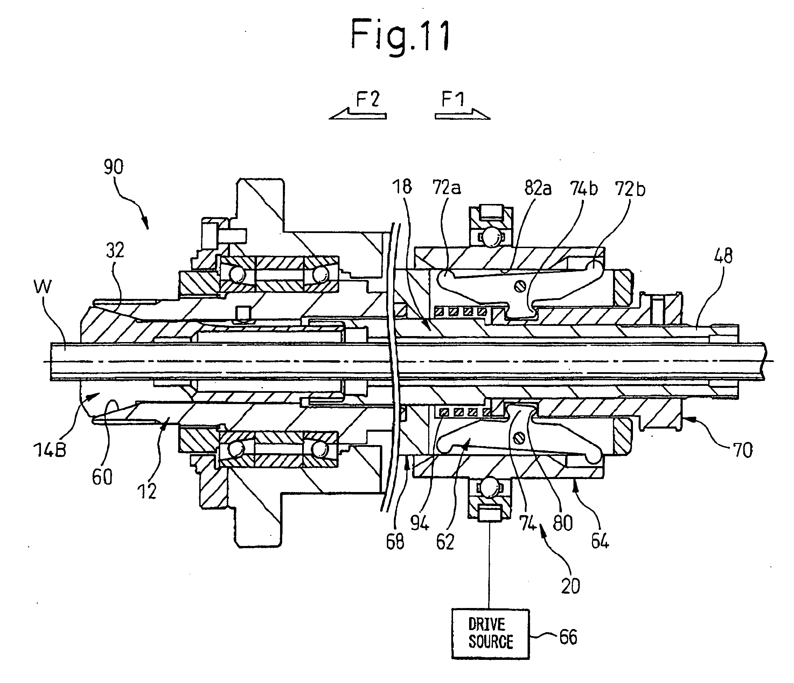

Figs. 8 to 11 are diagrams showing a material holding apparatus 90 according to an embodiment of the present invention, which is incorporated into a main spindle 12 of an automatic lathe, wherein Figs. 8 and 9 show the material holding apparatus 90 equipped with a chuck 14A having a stationary configuration, and Figs. 10 and 11 show the material holding apparatus 90 equipped with a chuck 14B having a moving configuration. The material holding apparatus 90 has a configuration substantially identical to that of the material holding apparatus 10 described above, except for the additional provisions of a biasing member provided in association with the chuck 14A having the stationary configuration and a biasing member provided in association with the driving mechanism 20. Therefore, corresponding components are denoted by common reference numerals, and descriptions thereof are not repeated.

In the material holding apparatus 90, a biasing member 92 is provided, in the case where the chuck 14A having the stationary configuration is installed, in place of the annular stopper 42 as already described, the biasing member 92 elastically biasing both of the chuck 14A and the second tubular element 52 of the actuating member 18 in a mutual direction allowing the pressure receiving surface 32 of the former is disengaged from the working surface 56 of the latter. As shown by way of example, the biasing member 92 may be formed from a compression coil spring interposed between the rear end face of the chuck 14A and the rear end wall of the second tubular element 52.

When the actuating member 18 (i.e., the first tubular element 48 and the second tubular element 52) moves from the closing-operation position (Fig. 9) to the opening-operation position (Fig. 8) under the reverse driving force F2 of the driving mechanism 20, the biasing member 92 acts to prevent, by its elastic biasing force, the chuck 14A from being dragged by the second tubular element 52 and thereby moving axially rearward. Such dragging action may otherwise be caused due to the fact that the chuck 14A acts like a wedge between the bar W and the second tubular element 52 when the actuating member 18 is located at the closing-operation position. By preventing the undesirable dragging action, it is possible to reliably disengage the working surface 56 of the second tubular element 52 from the pressure receiving surface 32 of the chuck 14A without using the annular stopper 42, and therefore to prevent the chuck 14A from insufficiently opening.

Further, in the material holding apparatus 90, a biasing member 94 is provided in the driving mechanism 20, regardless of the configurations of the chucks 14A, 14B, the biasing member 94 elastically urging the transmission member 70 secured to the first tubular element 48 of the actuating member 18 axially rearward (rightward, in the drawings) relative to the mount member 68 secured to the spindle 12. As shown by way of example, the biasing member 94 may be formed from a compression coil spring interposed between the mount member 68 and the transmission member 70 in a space defined between the mount member 68 and the first tubular element 48 of the actuating member 18.

In the case where the material holding apparatus 90 is equipped with the chuck 14A having the stationary configuration (Figs. 8 and 9), the biasing member 94 biasing the actuating member 18 axially rearward relative to the spindle 12 acts to assist the reverse driving force F2 of the driving mechanism 20. On the other hand, in the case where the material holding apparatus 90 is equipped with the chuck 14B having the moving configuration (Figs. 10 and 11), the biasing member 94 biasing the actuating member 18 axially rearward relative to the spindle 12 acts to assist the normal driving force F1 of the driving mechanism 20. In either case, unlike a return spring provided in a conventional material holding apparatus, the biasing member 94 is not intended to act to move the actuating member 18 only by the biasing force thereof, and thus it suffices for the biasing member 94 to have a function for eliminating an unsteadiness between several components of the driving mechanism 20 (e.g., for allowing each end 72a, 72b of the arm 72 of each bidirectional driving member 62 to stably slide along the cam surface 82).

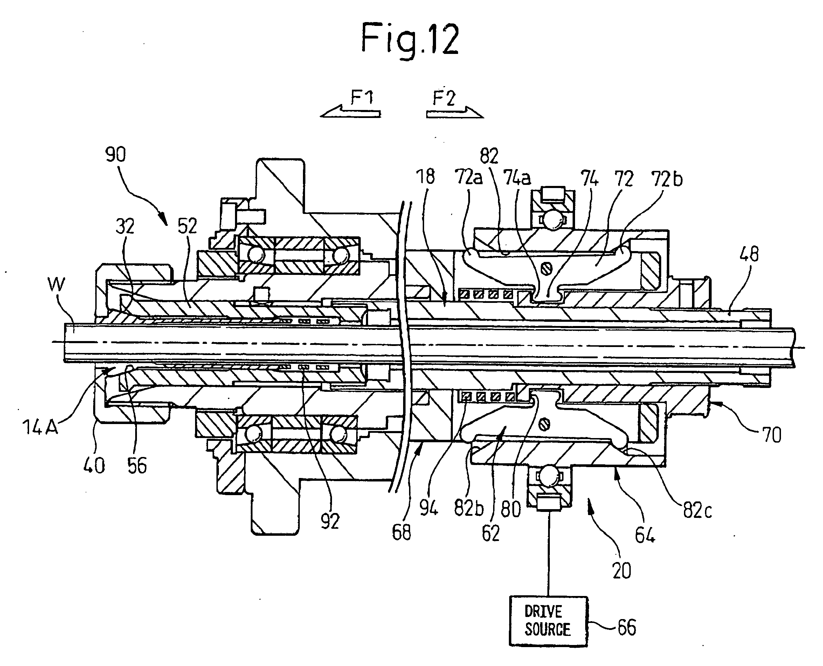

In the case where the material holding apparatus 90 has a configuration such that the driving mechanism 20 can locate the actuating member 18 at the intermediate position between the closing-operation position and the opening-operation position, the biasing member 94 shows different functions depending on the types of the chucks 14A, 14B. For example, in the case where the material holding apparatus 90 is equipped with the chuck 14A having the stationary configuration, the elastic biasing force of the biasing member 94 acts in a direction against the normal driving force F1 of the driving mechanism 20, during a period when the actuating member 18 is moved from the opening-operation position (Fig. 8) to the closing-operation position (Fig. 9). Therefore, during a period when the actuating member 18 is located at the intermediate position, the rear end 72b of the arm 72 of each bidirectional driving member 62 is stably engaged with the second tapered surface portion 82c of the cam surface 82 under the biasing force of the biasing member 94, so that the holding section 16 of the chuck 14A stably hold the bar W under the second pressing force (Fig. 12).

On the other hand, in the case where the material holding apparatus 90 is equipped with the chuck 14B having the moving configuration, the elastic biasing force of the biasing member 94 acts in a direction identical to that of the normal driving force F1 of the driving mechanism 20, during a period when the actuating member 18 is moved from the opening-operation position (Fig. 10) to the closing-operation position (Fig. 11). Therefore, another configuration may be provided such that, during a period when the actuating member 18 is located at the intermediate position, the second pressing force applied to the holding section 16 of the chuck 14B is generated due to the elastic biasing force of the biasing member 94.

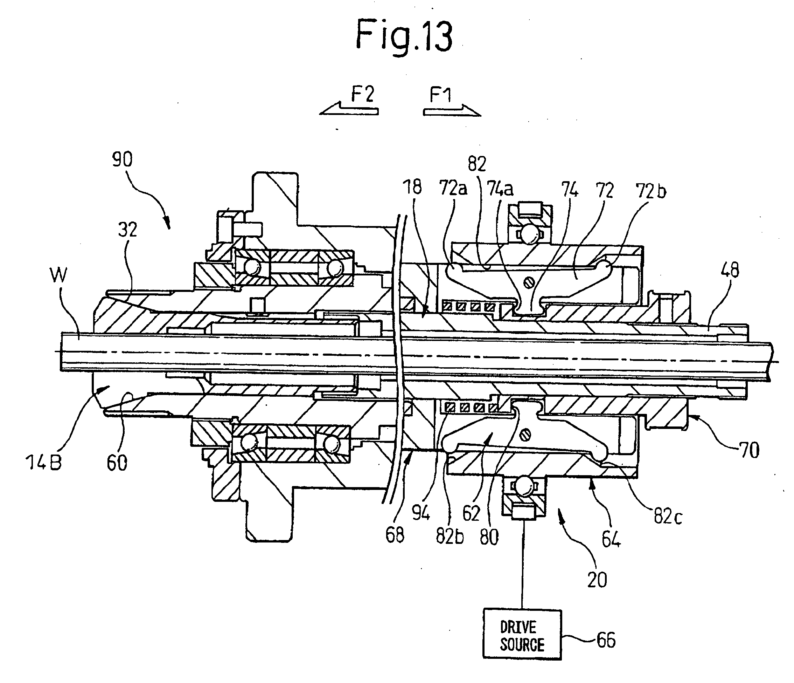

More specifically, when the actuating member 18 is located at the intermediate position, the holding section 16 of the chuck 14B holds the bar W under the second pressing force, while each of the bidirectional driving member 62 of the driving mechanism 20 is disposed at the rocked or pivoted position where both of the opposite ends 72a, 72b of the arm 72 are spaced from the cam surface 82 of the linear driving member 64 (Fig. 13). In this state, the holding force of the holding section 16 of the chuck 14B for holding the bar W is generated only by the elastic biasing force of the biasing member 94.

According to this configuration, in a situation such that, for example, the bar W (e.g., a remaining material after machining) is taken out from the spindle 12 for replacement, it is possible to incompletely open the chuck 14B in the material holding apparatus 90 and to dispose the actuating member 18 at the intermediate position for allowing the chuck 14B to elastically hold the bar W under the elastic biasing force of the biasing member 94, which also makes it possible to push out the bar W from the spindle 12 while the spindle 12 remains rotating. As a result, advantages are obtained such that the deviated wear of the chuck 14B or harmful vibrations, which may otherwise occur when the chuck 14B opens for the taking-out of the bar W while the spindle 12 remains rotating, can be prevented, and that time required for the deceleration or acceleration of the spindle 12 to stop the spindle 12 for the taking-out of the bar W can be reduced.

In this connection, although the material holding apparatus 90 as illustrated includes both of the biasing member 92 provided in association with the chuck 14A having the stationary configuration and the biasing member 94 provided in association with the driving mechanism 20, either one of the biasing members 92, 94 may be omitted. In particular, the biasing member 94 provided in association with the driving mechanism 20 may be constituted by other known elastic biasing means, such as a hydraulic power unit, in place of the compression coil spring.

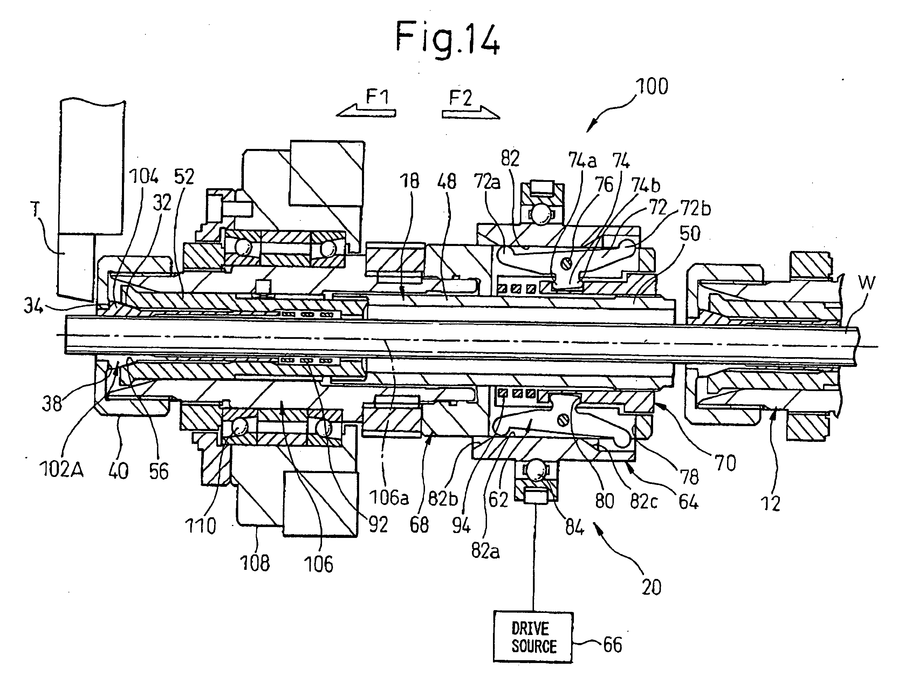

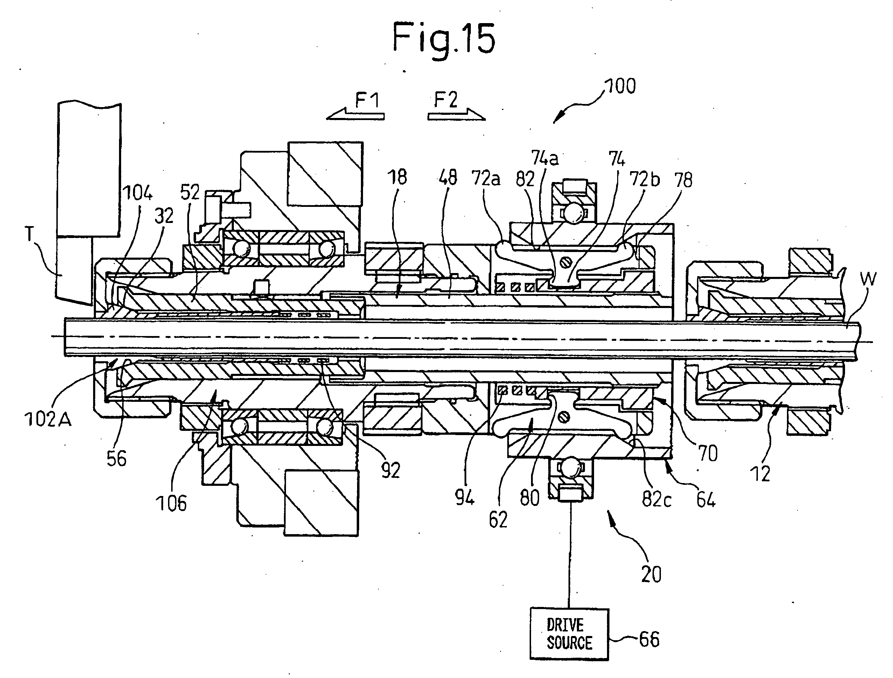

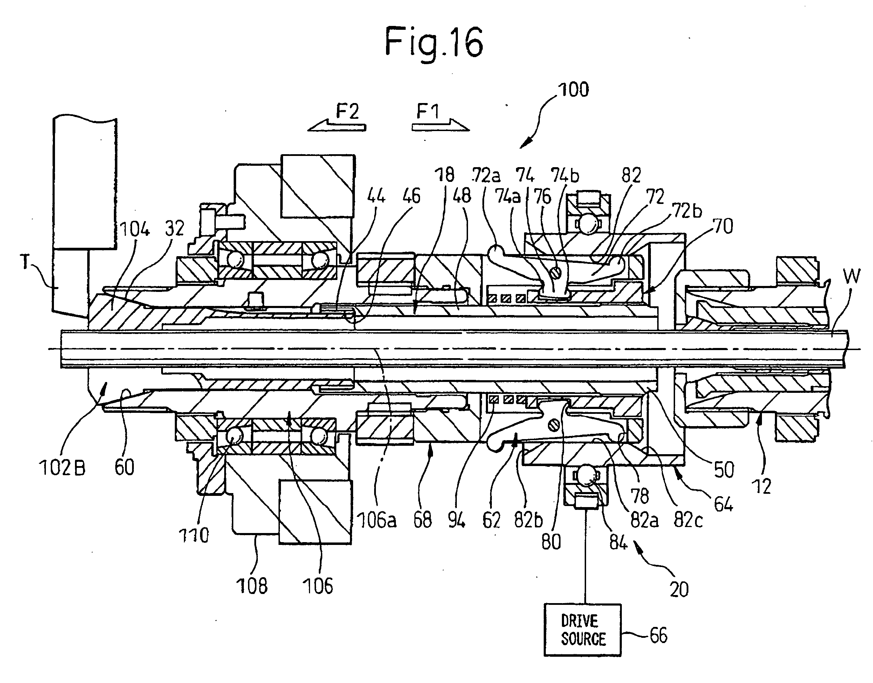

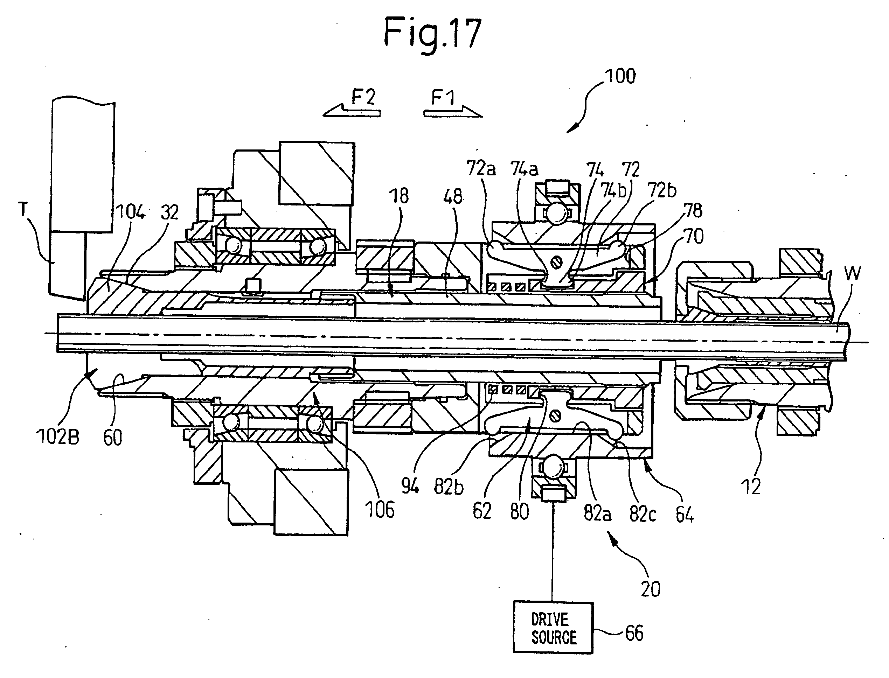

Figs. 14 to 17 are diagrams showing a material guiding apparatus 100 according to an embodiment of the present invention, which is installed in proximity to a working position for machining of a bar W in an automatic lathe, wherein Figs. 14 and 15 show the material guiding apparatus 100 equipped with a guide bush 102A having a stationary configuration, and Figs. 16 and 17 show the material guiding apparatus 100 equipped with a guide bush 102B having a moving configuration. The material guiding apparatus 100 as illustrated has a basic configuration substantially identical to that of the material holding apparatus 90 described above. Therefore, corresponding components are denoted by common reference numerals, and the descriptions thereof are not repeated.

The material guiding apparatus 100 is an auxiliary support apparatus provided in the automatic lathe, which supports, in a centering manner, the bar W securely held by the chuck 14 of the spindle 12 near a machined portion of the bar W at a leading end region thereof (a tool T is shown). The material guiding apparatus 100 has a rotary structure in which a guide bush 102 (generally referring to the guide bushes 102A, 102B) rapidly rotates together with the bar W held by the spindle 12 during a turning process operated in the automatic lathe. However, the present invention is not limited to this configuration, but also is applicable to a material guiding apparatus having a stationary structure in which the guide bush 102 is immovably disposed with respect to the rapidly rotating bar W.

The material guiding apparatus 100 includes a tubular guide bush 102 having a hollow tubular material support section 104 capable of opening and closing, and an adjusting mechanism for adjusting a radial dimension of the material support section 104 of the guide bush 102. The adjusting mechanism includes an actuating member 18 for actuating the material support section 104 of the guide bush 102 to open or close, and a driving mechanism 20 for making the actuating member 18 move between a closing-operation position allowing the material support section 104 to support the bar W in a centering manner under a pressing force (Figs. 15 and 17) and an opening-operation position relieving the pressing force and allowing the material support section 104 to release the bar W (Figs. 14 and 16).

The actuating member 18 and the driving mechanism 20 have a configuration substantially identical to that of the actuating member 18 and the driving mechanism 20 in the material holding apparatus 10, 90 described above. Thus, the driving mechanism 20 includes a bidirectional driving member 62 for selectively applying, to the actuating member 18, one of a normal driving force F1 for making the actuating member 18 move from the opening-operation position to the closing-operation position and a reverse driving force F2 for making the actuating member 18 move from the closing-operation position to the opening-operation position. According to this arrangement, the material guiding apparatus 100 can be provided, in an interchangeable manner, with both of the guide bush 102A having the stationary configuration adapted to receive the pressing force on the material support section 104 in a stationary state of the guide bush during a period when the actuating member 18 moves from the opening-operation position to the closing-operation position, and the guide bush 102B having the moving configuration adapted to receive the pressing force on the material support section 104 in a moving state of the guide bush moving together with the actuating member 18 during a period when the actuating member 18 moves from the opening-operation position to the closing-operation position.

The material guiding apparatus 100 further includes a tubular support member 106 that accommodates and supports the actuating member 18 relatively movably in an axial direction. Similar to the spindle 12 in the material holding apparatus 10, 90 described above, the support member 106, formed from a hollow tubular or cylindrical element having a central axis 106a, is rotatably mounted on a column 108 uprightly provided in front of the spindle 12 of the automatic lathe through a bearing unit 110 and connected with a rotational drive source (not shown) such as a servo-motor (Figs. 14 and 16).

The guide bush 102 (102A and 102B) has a configuration substantially identical to that of the chuck 14 (14A and 14B) in the material holding apparatus 10, 90 described above. Thus, the material holding section 104 of the guide bush 102 includes a slotted structure, and a truncated-conical pressure receiving surface 32 is formed in an outer circumferential surface of the slotted structure. When the pressure receiving surface 32 uniformly receives the pressing force in a radially inward direction, the material support section 104 elastically bends from an initial open position to reduce the diameter thereof and supports the bar W in the centering manner. When the pressing force to the pressure receiving surface 32 is relieved, the material support section 104 elastically restores to the open position to increase the diameter thereof, so as to release the bar W from the material support section 104. As described above, it is possible for the guide bush 102 to adjust the inner diameter of the material support section 104 by controlling an external force applied to the material support section 104.

The guide bush 102A having the stationary configuration exerts the centering function of the material support section 104 by displacing the actuating member 18 (i.e., a first tubular element 48 and a second tubular element 52) inside the support member 106 in a push-out direction (a leftward direction, in Fig. 14). On the other hand, the guide bush 102B having the moving configuration exerts the centering function of the material support section 104 by displacing the actuating member 18 (i.e., the first tubular element 48) inside the support member 106 in a draw-in direction (a rightward direction in Fig. 16).

In the case where the material guiding apparatus 100 is equipped with the guide bush 102A having the stationary configuration, an annular cap 40 having inside thereof an anchoring surface 38 capable of being engaged with an abutting surface 34 of the guide bush 102A is detachably attached to a front end (a left end, in Fig. 14) of the support member 106. When the guide bush 102A is properly accommodated in the support member 106 and the cap 40 is attached to the front end of the support member 106, the abutting surface 34 of the guide bush 102A tightly abuts against the anchoring surface 38 of the cap 40 under the elastic biasing force of the biasing member 92, so that it can be prevented that the guide bush 102A is pushed out and detached from the support member 106 during a period when the actuating member 18 moves from the opening-operation position to the closing-operation position. Further, during a period when the actuating member 18 moves from the closing-operation position to the opening-operation position, the biasing member 92 acts to prevent the guide bush 102A from being drawn into the support member 106 together with the actuating member 18, which otherwise may cause an improper opening.

In the case where the material guiding apparatus 100 is equipped with the guide bush 102B having the moving configuration, an external thread 44 formed on the rear end of the guide bush 102B is screwed into an internal thread 46 (Fig. 16) provided in the first tubular element 48, so that the guide bush 102B is detachably attached to the actuating member 18. When the guide bush 102B is properly accommodated in the support member 106 and joined to the actuating member 18, the guide bush 102B can axially move in the support member 106 while integrally following the axial movement of the actuating member 18.

In order to replace the guide bush 102A having the stationary configuration by the guide bush 102B having the moving configuration in the material guiding apparatus 100, the cap 40 is removed from the support member 106 and the guide bush 102A is taken out from the second tubular element 52 of the actuating member 18, and thereafter the second tubular element 52 is detached from the first tubular element 48. Then, the guide bush 102B can simply be attached to the first tubular element 48 of the actuating member 18.

An operation for supporting and releasing the bar, in the material guiding apparatus 100 having the above configuration, will be described below.

In the case where the material guiding apparatus 100 is equipped with the guide bush 102A having the stationary configuration (Figs. 14 and 15), a linearly-movable member 64 of the driving mechanism 20 is first disposed at the front end (the left end, in the drawings) in the reciprocation range on a mount member 68, before the bar W is inserted into the guide bush 102A. In this state, each of the bidirectional driving members 62 is disposed in such a manner that the front end 72a of an arm 72 is engaged with the major surface portion 82a of a cam surface 82 of the linearly-movable member 64 and the rear end 72b of the arm 72 is spaced rearward from the cam surface 82 (Fig. 14).

In this rocked or pivoted position, a projection 74 of each bidirectional driving member 62 is abutted at the rear-side tip 74b thereof against the wall face of a recess 80 of a transmission member 70, so as to apply an axially rearward driving force (i.e., the reverse driving force F2) to the transmission member 70. The transmission member 70 transmits the reverse driving force F2 to the first tubular element 48 of the actuating member 18, and thereby the first tubular element 48 is disposed integrally with the second tubular element 52 at the rear end in the axial movement range thereof inside the support member 106. As a result, the actuating member 18 is disposed at the opening-operation position, and the material support section 104 of the guide bush 102A opens.

In the state where the guide bush 102A opens (Fig. 14), the bar W is fed to the interior of the actuating member 18 from the rear side of the support member 106, until the desired length of the leading end of the bar W protrudes from the front end opening of the material support section 104 of the guide bush 102A. From this state, a drive source 66 of the driving mechanism 20 is activated, so as to make the linearly-movable member 64 move axially rearward along the outer circumferential surface of the mount member 68. Thus, the front end 72a of the arm 72 of each bidirectional driving member 62 is disengaged from the major surface portion 82a of the cam surface 82, and simultaneously the rear end 72b of the arm 72 of each bidirectional driving member 62 is brought into engagement with the second tapered surface portion 82c of the cam surface 82. While accompanying therewith, the respective bidirectional driving members 62 slightly rock or pivot synchronously with each other, from the rocked position shown in Fig. 14, in a direction allowing the rear ends 72b of the arms 72 to be drawn into the cavities 78 of the mount member 68.

As a result of this slight rocking or pivoting movement, the projection 74 of each bidirectional driving member 62 is abutted at the front-side tip 74a thereof against the wall face of the recess 80 of the transmission member 70, so as to apply an axially frontward driving force (i.e., the normal driving force F1) to the transmission member 70 by leverage or a lever action. Thereby, the actuating member 18 (i.e., the first tubular element 48 and the second tubular element 52) slightly moves axially frontward relative to the guide bush 102A inside the support member 106, and reaches the closing-operation position.

When the actuating member 18 is located at the closing-operation position, a working surface 56 of the second tubular element 52 is accurately pressed against the pressure receiving surface 32 of the guide bush 102A, so as to apply a required pressing force to the pressure receiving surface 32. As a result, the material support section 104 of the guide bush 102A elastically reduces its diameter and maintains a required inner diameter as already described, and in this state, supports the bar W in a centering and axially guidable manner (Fig. 15). In the state where the material guiding apparatus 100 supports the bar W in the centering manner as described above, the support member 106 rotates at high speed in synchronization with the spindle 12 of the automatic lathe, and a desired turning operation for the bar W is performed by the tool T. During this operation, the biasing member 94 provided in the driving mechanism 20 acts to press, by the elastic biasing force thereof, the rear end 72b of the arm 72 of each bidirectional driving member 62 against the second tapered surface portion 82c of the cam surface 82 of the linear driving member 64, and therefore unsteadiness of the bidirectional driving member 62 can be eliminated.

In order to make the guide bush 102A open to release the bar W, the drive source 66 is activated again, so as to make the linearly-movable member 64 move axially frontward along the outer circumferential surface of the mount member 68. Thus, the rear end 72b of the arm 72 of each bidirectional driving member 62 is disengaged from the second tapered surface portion 82c of the cam surface 82, and simultaneously the front end 72a of the arm 72 of each bidirectional driving member 62 is brought into engagement with the major surface portion 82a of the cam surface 82. While accompanying therewith, the respective bidirectional driving members 62 slightly rock or pivot synchronously with each other, from the rocked position shown in Fig. 15, in a direction allowing the front ends 72a of the arms 72 to be drawn into the cavities 78 of the mount member 68.

As a result of this slight rocking or pivoting movement, the projection 74 of each bidirectional driving member 62 is abutted at the rear-side tip 74b thereof against the wall face of the recess 80 of the transmission member 70, so as to apply an axially rearward driving force (i.e., the reverse driving force F2) to the transmission member 70 by leverage or a lever action. Thereby, the actuating member 18 (i.e., the first tubular element 48 and the second tubular element 52) slightly moves axially rearward relative to the guide bush 102A inside the support member 106, and reaches the opening-operation position.

On the other hand, in the case where the material guiding apparatus 100 is equipped with the guide bush 102B having the moving configuration (Figs. 16 and 17), the linearly-movable member 64 of the driving mechanism 20 is first disposed at the rear end (the right end, in the drawings) in the reciprocation range on the mount member 68, before the bar W is inserted into the guide bush 102B. In this state, each of the bidirectional driving members 62 is disposed in such a manner that the rear end 72b of the arm 72 is engaged with the major surface portion 82a of the cam surface 82 of the linearly-movable member 64 and the front end 72a of the arm 72 is spaced frontward from the cam surface 82 (Fig. 16).

In this rocked or pivoted position, the projection 74 of each bidirectional driving member 62 is abutted at the front-side tip 74a thereof against the wall face of the recess 80 of the transmission member 70, so as to apply an axially frontward driving force (i.e., the reverse driving force F2) to the transmission member 70. The transmission member 70 transmits the reverse driving force F2 to the first tubular element 48 of the actuating member 18, and thereby the first tubular element 48 is disposed integrally with the guide bush 102B at the front end in the axial movement range thereof inside the support member 106. As a result, the actuating member 18 is disposed at the opening-operation position, and the material support section 104 of the guide bush 102B opens.

In the state where the guide bush 102B opens (Fig. 16), the bar W is fed to the interior of the actuating member 18 from the rear side of the support member 106, until the desired length of the leading end of the bar w protrudes from the front end opening of the material support section 104 of the guide bush 102B. From this state, the drive source 66 of the driving mechanism 20 is activated, so as to make the linearly-movable member 64 move axially frontward along the outer circumferential surface of the mount member 68. Then, the linear driving member 64 is disposed at a position where the rear end 72b of the arm 72 of each bidirectional driving member 62 is disengaged from the major surface portion 82a of the cam surface 82 and the front end 72a of the arm 72 of each bidirectional driving member 62 is also not engaged with the cam surface 82.

At the above position, due to the elastic biasing force of the biasing member 94 acting in a direction identical to that of the normal driving force F1 of the driving mechanism 20, the pressure receiving surface 32 of the guide bush 102B is accurately pressed against the working surface 60 of the support member 106 through the actuating member 18, so that a required pressing force is applied to the pressure receiving surface 32. Thus, in this state, the actuating member 18 is disposed at the closing-operation position.

As will be understood from the above, in the case where the guide bush 102B having the moving configuration is installed on the material guiding apparatus 100, the elastic biasing force of the biasing member 94 acts as the normal driving force F1 of the driving mechanism 20, during a period when the actuating member 18 is located at the closing-operation position, and thereby the material support section 104 of the guide bush 102B elastically reduces its diameter as already described and supports the bar W in the centering and axially guidable manner (Fig. 17). Therefore, in a case where, for example, a bar W having an uneven outer diameter, such as a drawn material, is machined by turning, it is possible to make the material support section 104 of the guide bush 102B open or close in a passive manner (i.e., make the actuating member 18 move in a passive manner) under the elastic biasing force of the biasing member 94, correspondingly to the change in the outer diameter occurring due to the axial movement of the bar, during a period when the guide bush 102B located at the closing-operation position guides and supports the bar W.

In order to make the guide bush 102B open to release the bar W, the drive source 66 is activated again, so as to make the linearly-movable member 64 more axially rearward along the outer circumferential surface of the mount member 68. Thus, the rear end 72b of the arm 72 of each bidirectional driving member 62 is brought into engagement with the major surface portion 82a through the second tapered surface portion 82c of the cam surface 82. While accompanying therewith, the respective bidirectional driving members 62 slightly rock or pivot synchronously with each other, from the rocked position shown in Fig. 17, in a direction allowing the rear ends 72b of the arms 72 to be drawn into the cavities 78 of the mount member 68.

As a result of this slight rocking or pivoting movement, the projection 74 of each bidirectional driving member 62 is abutted at the front-side tip 74a thereof against the wall face of the recess 80 of the transmission member 70, so as to apply an axially frontward driving force (i.e., the reverse driving force F2) to the transmission member 70 by leverage or a lever action. Thereby, the actuating member 18 (i.e., the first tubular element 48) slightly moves axially frontward integrally with the guide bush 102B inside the support member 106, against the biasing force of the biasing member 94, and reaches the opening-operation position.

In the material guiding apparatus 100 according to the present invention, the driving mechanism 20 is also be configured to be able to locate the actuating member 18 at a second closing-operation position spaced, farther than the above closing-operation position, away from the opening-operation position. In this configuration, the drive source 66 of the driving mechanism 20 is controlled to dispose the linearly-movable member 64 at the other end position in the reciprocation range on the mount member 68, and either one of the ends 72a, 72b of the arm 72 of each bidirectional driving member 62 is brought into engagement with the major surface portion 82a of the cam surface 82 of the linearly-movable member 64, so that it is possible to ensure the second closing-operation position of the actuating member 18.

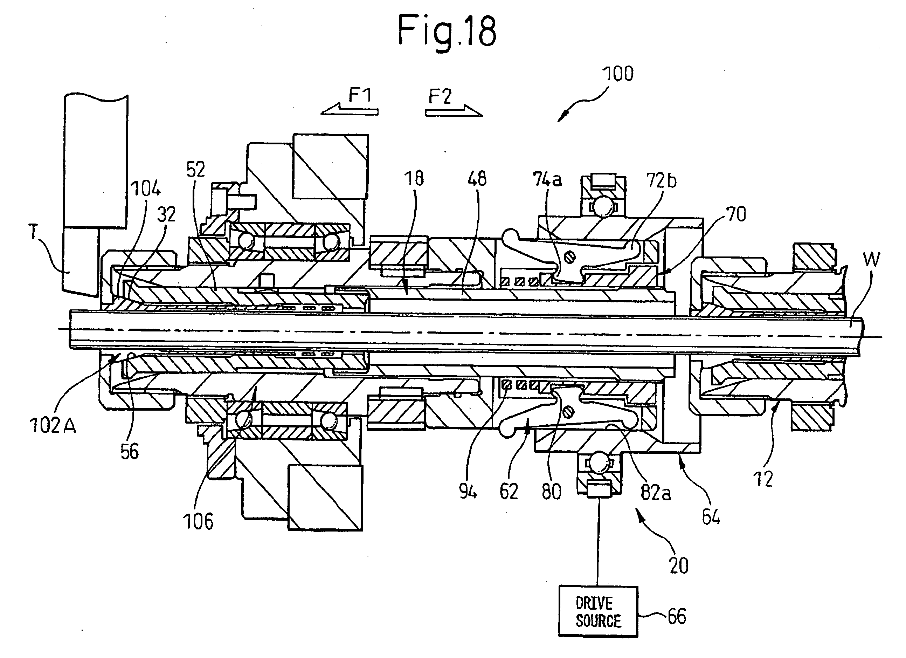

For example, in the case where the material guiding apparatus 100 is equipped with the guide bush 102A having the stationary configuration, the linearly-movable member 64 is made further move axially rearward so as to bring the rear end 72b of the arm 72 of each bidirectional driving member 62 into engagement with the major surface portion 82a of the cam surface 82, as shown in Fig. 18, after the actuating member 18 is made move from the opening-operation position (Fig. 14) to the closing-operation position (Fig. 15). Each bidirectional driving member 62 applies, due to the rocking movement during the above operation, an axially frontward driving force to the transmission member 70 by leverage or the lever action as already described, and thereby the actuating member 18 (i.e., the first tubular element 48 and the second tubular element 52) moves axially frontward in the support member 106 relative to the guide bush 102A, and reaches the second closing-operation position.

During a period when the actuating member 18 is located at the second closing-operation position, the working surface 56 of the second tubular element 52 is firmly pressed against the pressure receiving surface 32 of the guide bush 102A, so that the material support section 104 of the guide bush 102A fixedly and securely holds the bar W under a second pressing force larger than the above-described required pressing force allowing the material support section 104 to support the bar W in the centering manner.

According to the configuration described above, in a program, for example, for machining the bar W not with the bar W moving in an axial direction, but with the tool T moving in the same direction, performed during a machining operation by the automatic lathe, it is possible to perform the machining with high accuracy due to the operation of the guide bush 102 of the material guiding apparatus 100 for firmly and securely holding the bar W, in addition to the operation of the chuck 14 of the spindle 12. It should be noted that, however, the above configuration is based on the precondition that the material guiding apparatus 100 has the rotary structure as illustrated. Further, in the present invention, the guide bush may also be configured to support the bar in the centering manner, without securely holding the bar, even when the actuating member is located at the second closing-operation position.

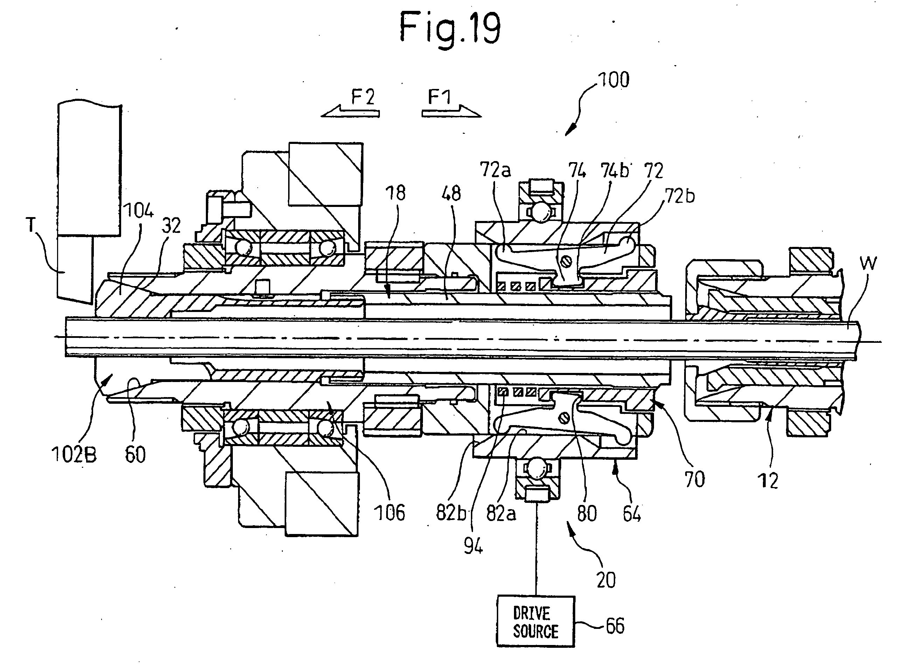

The above operative effects can also be ensured in a similar way in the case where the material guiding apparatus 100 is equipped with the guide bush 102B having the moving configuration. In this case, the linearly-movable member 64 is made to further move axially frontward so as to bring the front end 72a of the arm 72 of each bidirectional driving member 62 into engagement with the major surface portion 82a of the cam surface 82, as shown in Fig. 19, after the actuating member 18 is made move from the opening-operation position (Fig. 16) to the closing-operation position (Fig. 17). Each bidirectional driving member 62 applies, due to the rocking movement during the above operation, an axially rearward driving force to the transmission member 70 by leverage or the lever action as already described, and thereby the actuating member 18 (i.e., the first tubular element 48) moves axially rearward together with the guide bush 102B in the support member 106, and reaches the second closing-operation position.

During a period when the actuating member 18 is located at the second closing-operation position, the pressure receiving surface 32 of the guide bush 102B is firmly pressed against the working surface 60 of the support member 106, so that the material support section 104 of the guide bush 102B fixedly and securely holds the bar W under a second pressing force larger than the above-described required pressing force allowing the material support section 104 to support the bar W in the centering manner.

Although the above-described material guiding apparatus 100 may include both of the biasing member 92 provided in association with the guide bush 102A having the stationary configuration and the biasing member 94 provided in association with the driving mechanism 20, at least one of the biasing members 92 and 94 may be omitted. The material guiding apparatus 100 that does not include both of the biasing members 92, 94 has a configuration similar to the material holding apparatus 10 described above, and thus ensure comparable operative effects.

While several preferred embodiments of the present invention have been described above, various modifications may be made to the present invention within the scope of the appended claims. For example, in each of the above-described embodiments, the transmission member 70 may be attached to the first tubular element 48 of the actuating member 18 by using a mutually screwing structure of the internal thread of the transmission member 70 and the external thread of the first tubular element 48. According to this configuration, it is possible to suitably select a position where the transmission member 70 is screwed on the first tubular element 48, and thus to finely adjust, by a desired amount, the inner diameter of the chuck 14A, 14B or the guide bush 102A, 102B obtained under the driving force of the bidirectional driving member 62.

As apparent from the above description, in the material holding apparatus according to the present invention, the driving mechanism acts to selectively obtain one of the normal driving force for closing the holding section of the chuck and the reverse driving force for opening the holding section of the chuck. Thus, for example, the material holding apparatus can be equipped with two types of chucks in an interchangeable manner, in which the driving force of the driving mechanism, acting as the normal driving force for one type of chuck, in turn acts as the reverse driving force for another type of chuck. Therefore, it is possible to appropriately and easily change the configuration of the chuck actuating mechanism in consideration of a mechanical configuration of the machine tool, material properties of a workpiece to be machined, required machining accuracy and the like. Consequently, it is possible to provide the material holding apparatus as a versatile or multipurpose apparatus, while preventing equipment cost and the burden on operators from increasing.

Further, for either of the chuck having the stationary configuration and the chuck having the moving configuration, the driving mechanism can reliably exhibit the normal driving force acting in mutually opposite directions relative to the respective chucks. As a result, when these chucks are interchanged, it is possible to stably obtain a necessary holding force in either of the chucks.

Still further, it is possible to selectively establish one of the actuating-member pushing-type structure using the chuck having the stationary configuration and the actuating-member drawing-type structure using the chuck having the moving configuration, only by replacing the chuck having the stationary configuration together with the second tubular element by the chuck having the moving configuration or vise versa, in a state where the driving mechanism and the first tubular element of the actuating member that receives the driving force from the driving mechanism remain mounted.

Still further, the normal driving forces of the driving mechanism for closing the holding sections of the respective chucks having stationary and moving configurations can act as the thrust forces applied to the actuating member in mutually opposite directions, so that it is possible to simplify the configuration of the bidirectional driving member of the driving mechanism.

Still further, the driving mechanism can be configured to locate the actuating member at the intermediate position between the closing-operation position and the opening-operation position, so that it is possible for the chuck to additionally possess a guide and support function similar to that of a guide bush.

The material guiding apparatus according to the present invention can also exhibit operative effects similar to the above. For example, the material guiding apparatus can be equipped with two types of guide bushes in an interchangeable manner, in which the driving force of the driving mechanism, acting as the normal driving force for one type of guide bush, in turn acts as the reverse driving force for another type of guide bush. Therefore, it is possible to appropriately and easily change the configuration of the guide-bush actuating mechanism in consideration of a mechanical configuration of the machine tool, material properties of a workpiece to be machined, required machining accuracy and the like. Consequently, it is possible to provide the material guiding apparatus as a versatile or multipurpose apparatus, while preventing equipment cost and burdens on operators from increasing.

Still further, according to the present invention, it is possible to easily change the mode of opening or closing operation of the material holding apparatus or the material guiding apparatus in the automatic lathe.

While the present invention has been described with reference to the preferred embodiments thereof, it will be understood by those skilled in the art that various modifications and changes may be made without departing from the scope of the claims.

## Claims

1. A material holding apparatus adapted to be incorporated into a machine tool and to securely hold a worpiece (W), the material holding apparatus having an axial frontward region and an axial rearward region and comprising:
a tubular chuck (14A, 14B) accomodated in the axial frontward region and having a holding section capable of opening and closing;
an actuating member (18) for actuating said holding section to open or close; and
a driving mechanism (20) for making said actuating member (18) move between a closing-operation position allowing said holding section to securely hold a workpiece (W) under a pressing force and an opening-operation position relieving said pressing force and allowing said holding section to release the workpiece (W);
wherein said driving mechanism (20) comprises a bidirectional driving member (62) for selectively applying, to said actuating member (18), one of a normal driving force for making said actuating member (18) move from said opening-operation position to said closing-operation position and a reverse driving force for making said actuating member (18) move from said closing-operation position to said opening-operation position
wherein said driving mechanism (20) is capable of locating said actuating member (18) at an intermediate position between said closing-operation position and said opening-operation position, **characterized in that**
when said actuating member (18) is located at said intermediate position, said holding section of said chuck (14A, 14B) holds the workpiece (W) under a second pressing force smaller than said pressing force allowing said holding section to securely hold the workpiece (W),
wherein the material holding apparatus further comprises a biasing member (94) elastically biasing said actuating member (18) axially rearward,
and wherein, when said actuating member (18)is located at said intermediate position, said second pressing force is generated by an elastic biasing force of said biasing member (94).

2. A material holding apparatus according to claim 1, comprising, in an interchangeable manner, said chuck (14A, 14B) having a stationary configuration adapted to receive said pressing force on said holding section in a stationary state of said chuck(14A, 14B)during a period when said actuating member (18) moves from said opening-operation position to said closing-operation position, and said chuck(14A, 14B) having a moving configuration adapted to receive said pressing force on said holding section in a moving state of said chuck(14A, 14B) moving together with said actuating member (18)during a period when said actuating member (18) moves from said opening-operation position to said closing-operation position.

3. A material holding apparatus according to claim 2, wherein said actuating member (18) comprises a first tubuar element (48) adapted to selectively receive one of said normal driving force and said reverse driving force from said bidirectional driving member (62) of said driving mechanism (20), said chuck (14A, 14B) having the moving configuration being able to be detachably attached to said first tubular element (48), and a second tubular element (52) adapted to be exchanged with said chuck (14A, 14B) having the moving configuration and capable of being detachably attached to said first tubular element (48)in an axially aligned manner, said second tubular element (32) being adapted to support said chuck (14A, 14B) having the stationary configuration relatively movably in an axial direction.

4. A material holding apparatus according to claim 3, further comprising a tubular support member accommodating and supporting said actuating member (18) relatively movably in an axial direction; wherein, when said chuck (14A, 14B) having the moving configuration is attached to said first tubular element (48), said first tubular element (48) and said chuck (14A, 14B) having the moving configuration integrally move axially relative to said support member under said normal driving force so that said holding section of said chuck (14A, 14B) having the moving configuration receives said pressing force from said support member and, when said second tubular element (52) supporting said chuck (14A, 14B) having the stationary configuration is attached to said first tubular element (48), said first tubular element (48) and said second tubular element (52) integrally move axially relative to said chuck (14A, 14B) having the stationary configuration under said normal driving force so that said holding section of said chuck (14A, 14B) having the stationary configuration receives said pressing force from said second tubular element (52) coaxially supported by said support member.

5. A material holding apparatus according to claim 2, wherein said normal driving force of said driving mechanism for closing said holding section of said chuck (14A, 14B) having the stationary configuration, and said normal driving force of said driving mechanism for closing said holding section of said chuck (14A, 14B) having the moving configuration, are thrust forces applied to said actuating member (18) in directions opposite to each other.

6. A material holding apparatus according to claim 1, wherein said driving mechanism further comprises a linearly-movable member (64) moving linearly relative to said bidirectional driving member (62) to allow said bidirectional driving member (62) to selectively exhibit one of said normal driving force and said reverse driving force; and wherein said bidirectional driving member (62) operates to convert the linear movement of said linearly-movable member (64) into a rocking movement and selectively apply one of said normal driving force and said reverse driving force to said actuating member (18) by leverage.

7. An automatic lathe comprising:
the material holding apparatus according to claim 1; and
the spindle incorporating therein said material holding apparatus.

8. A material guiding apparatus adapted to be incorporated into a machine tool and to support a workpiece (W) near its machined portion, the material guiding apparatus having an axial frontward region and an axial rearward region and comprising:
a tubular guide bush (102A, 102B) accomodated in the axial frontward region and having a material support section capable of opening and closing;
an actuating member (18) for actuating said ' material support section to open or close; and
a driving mechanism (20) for making said actuating member (18) move between a closing-operation position allowing said material support section to support a workpiece (W) in a centering manner under a pressing force and an opening-operation position relieving said pressing force and allowing said material support section to release the workpiece (W);
wherein said driving mechanism (20) comprises a bidirectional driving member (62) for selectively applying, to said actuating member (18), one of a normal driving force for making said actuating member (18) move from said opening-operation position to said closing-operation position and a reverse driving force for making said actuating member (18) move from said closing-operation position to said opening-operation position;
wherein said driving mechanism (20) is capable of locating said actuating member (18) at a second closing-operation position spaced, farther than said closing-operation position, away from said opening-operation position;
**characterized in that**, when said actuating member (18) is located at said second closing-operation position, said material support section of said guide bush (102A, 102B) fixedly and securely holds the workpiece (W) under a second pressing force larger than said pressing force allowing said material support section to support the workpiece (W) in the centering manner;
wherein the material guiding apparatus further comprises a biasing member (94) elastically biasing said actuating member axially rearward,
and wherein, when said actuating member (18) is located at said closing-operation position, said pressing force is generated by an elastic biasing force of said biasing member (94) and further comprising, in an interchangeable manner, said guide bush (102A, 102B) having a stationary configuration adapted to receive said pressing force on said material support section in a stationary state of said guide bush (102A, 102B) during a period when said actuating member (18) moves from said opening-operation position to said closing-operating position, and said guide bush (102A, 102B) having a moving configuration adapted to receive said pressing force on said material support section in a moving state of said guide bush (102A, 102B) moving together with said actuating member (18) during a period when said actuating member (18) moves from said opening-operation position to said closing-operation position.

9. A material guiding apparatus according to claim 8, wherein said actuating member (18) comprises a first tubular element (48) adapted to selectively receive one of said normal driving force and said reverse driving force from said bidirectional driving member (62) of said driving mechanism, said guide bush (102A, 102B) having the moving configuration being able to be detachably attached to said first tubular element (48), and a second tubular element (52) adapted to be exchanged with said guide (102A, 102B) bush having the moving configuration and capable of being detachably attached to said first tubular element (48) in an axially aligned manner, said second tubular element (52) being adapted to support said guide bush (102A, 102B) having the stationary configuration relatively movably in an axial direction.

10. A material guiding apparatus according to claim 9, further comprising a tubular support member accommodating and supporting said actuating member (18) relatively movably in an axial direction; wherein, when said guide bush (102A, 102B) having the moving configuration is attached to said first tubular element (48), said first tubular element (48) and said guide bush (102A, 102B) having the moving configuration integrally move axially relative to said support member under said normal driving force so that said material support section of said guide bush (102A, 102B) having the moving configuration receives said pressing force from said support member and, when said second tubular element (52) supporting said guide bush (102A, 102B) having the stationary configuration is attached to said first tubular element (68), said first tubular element (48) and said second tubular element (58) integrally move axially relative to said guide bush (102A, 102B) having the stationary configuration under said normal driving force so that said material support section of said guide bush (102A, 102B) having the stationary configuration receives said pressing force from said second tubular element (52) coaxially supported by said support member.

11. A material guiding apparatus according to claim 8, wherein said normal driving force of said driving mechanism for closing said material support section of said guide bush (102A, 102B) having the stationary configuration, and said normal driving force of said driving mechanism for closing said material support section of said guide bush (102A, 102B) having the moving configuration, are thrust forces applied to said actuating member (18) in directions opposite to each other.

12. A material guiding apparatus according to claim 8, wherein said driving mechanism (20) further comprises a linearly-movable member (64) moving linearly relative to said bidirectional driving member (62) to allow said bidirectional driving member (62) to selectively exhibit one of said normal driving force and said reverse driving force; and wherein said bidirectional driving member (62) operates to convert the linear movement of said linearly-movable member (63) into a rocking movement and selectively apply one of said normal driving force and said reverse driving force to said actuating member (18) by leverage.

13. An automatic lathe comprising:
the material guiding apparatus according to claim 8;
wherein said material guiding apparatus is mounted adjacent to a machining position for the workpiece.

## Patentansprüche

1. Materialhaltevorrichtung, die geeignet ist zum Einsetzen in eine Werkzeugmaschine und zum sicheren Halten eines Werkstücks (W), wobei die Materialhaltevorrichtung einen axialen Vorderbereich und einen axialen Hinterbereich aufweist, und die umfasst:
ein rohrförmiges Spannfutter (14A, 14B), das im axialen Vorderbereich aufgenommen ist und einen Halteabschnitt aufweist, der sich öffnen und schließen kann;
ein Betätigungsglied (18) zum Betätigen des Halteabschnitts, so dass er sich öffnet oder schließt; und
einen Antriebsmechanismus (20), der das Betätigungsglied (18) veranlasst zum Bewegen zwischen einer Schließvorgangsposition, die dem Halteabschnitt ermöglicht, ein Werkstück (W) unter einer Druckkraft sicher zu halten, und einer Öffnungsvorgangsposition, worin die Druckkraft nachlässt und die dem Halteabschnitt ermöglicht, das Werkstück (W) freizugeben;
wobei der Antriebsmechanismus (20) ein bidirektionales Antriebsglied (62) umfasst zum selektiven Anlegen an das Betätigungsglied (18) einer Normalantriebskraft, um das Betätigungsglied (18) zum Bewegen von der Öffnungsvorgangsposition in die Schließvorgangsposition zu veranlassen, oder einer Umkehrantriebskraft, um das Betätigungsglied (18) zum Bewegen von der Schließvorgangsposition in die Öffnungsvorgangsposition zu veranlassen,
wobei der Antriebsmechanismus (20) das Betätigungsglied (18) an einer Zwischenposition zwischen der Schließvorgangsposition und der Öffnungsvorgangsposition anordnen kann,
**dadurch gekennzeichnet, dass**
wenn das Betätigungsglied (18) an der Zwischenposition angeordnet ist, der Halteabschnitt des Spannfutters (14A, 14B) das Werkstück (W) unter einer zweiten Druckkraft hält, die geringer ist als die Druckkraft, die es dem Halteabschnitt ermöglicht, das Werkstück (W) sicher zu halten,
wobei die Materialhaltevorrichtung weiter ein Vorspannglied (94) umfasst, das das Betätigungsglied (18) axial nach hinten elastisch vorspannt,
und wobei, wenn das Betätigungsglied (18) an der Zwischenposition angeordnet ist, die zweite Druckkraft durch eine elastische Vorspannkraft des Vorspannglieds (94) erzeugt wird.

2. Materialhaltevorrichtung nach Anspruch 1, die untereinander austauschbar umfasst, das Spannfutter (14A, 14B), das eine stationäre Konfiguration aufweist, die geeignet ist, die Druckkraft auf den Halteabschnitt in einem stationären Zustand des Spannfutters (14A, 14B) während eines Zeitraums aufzunehmen, wenn das Betätigungsglied (18) sich von der Öffnungsvorgangsposition in die Schließvorgangsposition bewegt, und
das Spannfutter (14A, 14B), das eine bewegliche Konfiguration aufweist, die geeignet ist, die Druckkraft auf den Halteabschnitt in einem Bewegungszustand des Spannfutters (14A, 14B), das sich zusammen mit dem Betätigungsglied (18) bewegt, während eines Zeitraums aufzunehmen, wenn das Betätigungsglied (18) sich von der Öffnungsvorgangsposition in die Schließvorgangsposition bewegt.

3. Materialhaltevorrichtung nach Anspruch 2, bei der das Betätigungsglied (18) ein erstes rohrförmiges Element (48) umfasst, das geeignet ist, die Normalantriebskraft oder die Umkehrantriebskraft vom bidirektionalen Antriebsglied (62) des Antriebsmechanismus (20) selektiv aufzunehmen, wobei das Spannfutter (14A, 14B) mit der beweglichen Konfiguration lösbar an dem ersten rohrförmigen Element (48) angebracht werden kann, und ein zweites rohrförmiges Element (52) umfasst, das gegen das Spannfutter (14A, 14B) mit der beweglichen Konfiguration ausgetauscht werden kann und das in axialer Ausrichtung am ersten rohrförmigen Element (48) lösbar angebracht werden kann, wobei das zweite rohrförmige Element (32) geeignet ist, das Spannfutter (14A, 14B) mit der stationären Konfiguration so zu lagern, dass es in axialer Richtung relativbeweglich ist.

4. Materialhaltevorrichtung nach Anspruch 3, weiter umfassend ein rohrförmiges Trägerglied, in dem das Betätigungsglied (18) in axialer Richtung relativbeweglich aufgenommen und gelagert ist; wobei, wenn das Spannfutter (14A, 14B) mit der beweglichen Konfiguration an dem ersten rohrförmigen Element (48) angebracht ist, sich das erste rohrförmige Element (48) und das Spannfutter (14A, 14B) mit der beweglichen Konfiguration integral axial relativ zum Trägerglied unter der Normalantriebskraft bewegen, so dass der Halteabschnitt des Spannfutters (14A, 14B) mit der beweglichen Konfiguration die Druckkraft von dem Trägerglied aufnimmt und, wenn das zweite rohrförmige Element (52), an dem das Spannfutter (14A, 14B) mit der stationären Konfiguration gelagert ist, am ersten rohrförmigen Element (48) angebracht ist, sich das erste rohrförmige Element (48) und das zweite rohrförmige Element (52) integral axial relativ zum Spannfutter (14A, 14B) mit der stationären Konfiguration unter der Normalantriebskraft bewegen, so dass der Halteabschnitt des Spannfutters (14A, 14B) mit der stationären Konfiguration die Druckkraft von dem zweiten rohrförmigen Element (52) aufnimmt, das von dem Trägerglied koaxial gelagert ist.

5. Materialhaltevorrichtung nach Anspruch 2, bei der die Normalantriebskraft des Antriebsmechanismus zum Schließen des Halteabschnitts des Spannfutters (14A, 14B) mit der stationären Konfiguration und die Normalantriebskraft des Antriebsmechanismus zum Schließen des Halteabschnitts des Spannfutters (14A, 14B) mit der beweglichen Konfiguration Stoßkräfte sind, die auf das Betätigungsglied (18) in zueinander entgegengesetzte Richtungen angelegt werden.

6. Materialhaltevorrichtung nach Anspruch 1, bei der der Antriebsmechanismus weiter ein linearbewegliches Glied (64) umfasst, das sich relativ zum bidirektionalen Antriebsglied (62) linear bewegt, so dass es dem bidirektionalen Antriebsglied (62) ermöglicht, selektiv die Normalantriebskraft oder die Umkehrantriebskraft aufzubringen; und
bei der das bidirektionale Antriebsglied (62) so funktioniert, dass es die Linearbewegung des linearbeweglichen Glieds (64) in eine Wippbewegung umwandelt und durch Hebelwirkung selektiv die Normalantriebskraft oder die Umkehrantriebskraft auf das Betätigungsglied (18) angelegt.

7. Automatische Drehmaschine, umfassend:
die Materialhaltevorrichtung nach Anspruch 1 und
die Spindel, in der diese Materialhaltevorrichtung eingesetzt ist.

8. Materialführungsvorrichtung, die geeignet ist zum Einsetzen in eine Werkzeugmaschine und zum Tragen eines Werkstücks (W) nahe seinem bearbeiteten Teil, wobei die Materialführungsvorrichtung einen axialen Vorderbereich und einen axialen Hinterbereich aufweist, und die umfasst:
eine rohrförmige Führungsbuchse (102A, 102B), die im axialen Vorderbereich aufgenommen ist und einen Materialträgerabschnitt aufweist, der sich öffnen und schließen kann;
ein Betätigungsglied (18) zum Betätigen des Materialträgerabschnitts, so dass er sich öffnet oder schließt; und
einen Antriebsmechanismus (20), der das Betätigungsglied (18) veranlasst zum Bewegen zwischen einer Schließvorgangsposition, die dem Materialträgerabschnitt ermöglicht, ein Werkstück (W) unter einer Druckkraft zentrierend zu tragen, und einer Öffnungsvorgangsposition, worin die Druckkraft nachlässt und die dem Materialträgerabschnitt ermöglicht, das Werkstück (W) freizugeben;
wobei der Antriebsmechanismus (20) ein bidirektionales Antriebsglied (62) umfasst zum selektiven Anlegen an das Betätigungsglied (18) einer Normalantriebskraft, um das Betätigungsglied (18) zum Bewegen von der Öffnungsvorgangsposition in die Schließvorgangsposition zu veranlassen, oder einer Umkehrantriebskraft, um das Betätigungsglied (18) zum Bewegen von der Schließvorgangsposition in die Öffnungsvorgangsposition zu veranlassen;
wobei der Antriebsmechanismus (20) das Betätigungsglied (18) an einer zweiten Schließvorgangsposition anordnen kann, die von der Öffnungsvorgangsposition weiter entfernt ist als die Schließvorgangsposition;
**dadurch gekennzeichnet, dass**
wenn das Betätigungsglied (18) an der zweiten Schließvorgangsposition angeordnet ist, der Materialträgerabschnitt der Führungsbuchse (102A, 102B) das Werkstück (W) unter einer zweiten Druckkraft fest und sicher hält, die höher ist als die Druckkraft, die es dem Materialträgerabschnitt ermöglicht, das Werkstück (W) zentrierend zu tragen;
wobei die Materialführungsvorrichtung weiter ein Vorspannglied (94) umfasst, das das Betätigungsglied (18) axial nach hinten elastisch vorspannt,
und wobei, wenn das Betätigungsglied (18) an der Schließvorgangsposition angeordnet ist, die Druckkraft durch eine elastische Vorspannkraft des Vorspannglieds (94) erzeugt wird, und untereinander austauschbar weiter umfasst, die Führungsbuchse (102A, 102B), die eine stationäre Konfiguration aufweist, die geeignet ist, die Druckkraft auf den Materialträgerabschnitt in einem stationären Zustand der Führungsbuchse (102A, 102B) während eines Zeitraums aufzunehmen, wenn das Betätigungsglied (18) sich von der Öffnungsvorgangsposition in die Schließvorgangsposition bewegt, und die Führungsbuchse (102A, 102B), die eine bewegliche Konfiguration aufweist, die geeignet ist, die Druckkraft auf den Materialträgerabschnitt in einem Bewegungszustand der Führungsbuchse (102A, 102B), die sich zusammen mit dem Betätigungsglied (18) bewegt, während eines Zeitraums aufzunehmen, wenn das Betätigungsglied (18) sich von der Öffnungsvorgangsposition in die Schließvorgangsposition bewegt.

9. Materialführungsvorrichtung nach Anspruch 8, bei der das Betätigungsglied (18) ein erstes rohrförmiges Element (48) umfasst, das geeignet ist, die Normalantriebskraft oder die Umkehrantriebskraft vom bidirektionalen Antriebsglied (62) des Antriebsmechanismus selektiv aufzunehmen, wobei die Führungsbuchse (102A, 102B) mit der beweglichen Konfiguration lösbar an dem ersten rohrförmigen Element (48) angebracht werden kann, und ein zweites rohrförmiges Element (52) umfasst, das gegen die Führungsbuchse (102A, 102B) mit der beweglichen Konfiguration ausgetauscht werden kann und das in axialer Ausrichtung am ersten rohrförmigen Element (48) lösbar angebracht werden kann, wobei das zweite rohrförmige Element (52) geeignet ist, die Führungsbuchse (102A, 102B) mit der stationären Konfiguration so zu lagern, dass es in axialer Richtung relativbeweglich ist.

10. Materialführungsvorrichtung nach Anspruch 9, weiter umfassend ein rohrförmiges Trägerglied, in dem das Betätigungsglied (18) in axialer Richtung relativbeweglich aufgenommen und gelagert ist; wobei, wenn die Führungsbuchse (102A, 102B) mit der beweglichen Konfiguration an dem ersten rohrförmigen Element (48) angebracht ist, sich das erste rohrförmige Element (48) und die Führungsbuchse (102A, 102B) mit der beweglichen Konfiguration integral axial relativ zum Trägerglied unter der Normalantriebskraft bewegen, so dass der Materialträgerabschnitt der Führungsbuchse (102A, 102B) mit der beweglichen Konfiguration die Druckkraft von dem Trägerglied aufnimmt und, wenn das zweite rohrförmige Element (52), an dem die Führungsbuchse (102A, 102B) mit der stationären Konfiguration gelagert ist, am ersten rohrförmigen Element (48) angebracht ist, sich das erste rohrförmige Element (48) und das zweite rohrförmige Element (52) integral axial relativ zur Führungsbuchse (102A, 102B) mit der stationären Konfiguration unter der Normalantriebskraft bewegen, so dass der Materialträgerabschnitt der Führungsbuchse (102A, 102B) mit der stationären Konfiguration die Druckkraft von dem zweiten rohrförmigen Element (52) aufnimmt, das von dem Trägerglied koaxial gelagert ist.

11. Materialführungsvorrichtung nach Anspruch 8, bei der die Normalantriebskraft des Antriebsmechanismus zum Schließen des Materialträgerabschnitts der Führungsbuchse (102A, 102B) mit der stationären Konfiguration und die Normalantriebskraft des Antriebsmechanismus zum Schließen des Materialträgerabschnitts der Führungsbuchse (102A, 102B) mit der beweglichen Konfiguration Stoßkräfte sind, die auf das Betätigungsglied (18) in zueinander entgegengesetzte Richtungen angelegt werden.

12. Materialführungsvorrichtung nach Anspruch 8, bei der der Antriebsmechanismus weiter ein linearbewegliches Glied (64) umfasst, das sich relativ zum bidirektionalen Antriebsglied (62) linear bewegt, so dass es dem bidirektionalen Antriebsglied (62) ermöglicht, selektiv die Normalantriebskraft oder die Umkehrantriebskraft aufzubringen; und
bei der das bidirektionale Antriebsglied (62) so funktioniert, dass es die Linearbewegung des linearbeweglichen Glieds (64) in eine Wippbewegung umwandelt und durch Hebelwirkung selektiv die Normalantriebskraft oder die Umkehrantriebskraft auf das Betätigungsglied (18) angelegt.

13. Automatische Drehmaschine, umfassend:
die Materialführungsvorrichtung nach Anspruch 8,
bei der die Materialführungsvorrichtung angrenzend an eine Bearbeitungsposition für das Werkstück angebracht ist.

## Revendications

1. Appareil de maintien de matériel conçu pour être incorporé dans une machine-outil et pour maintenir fermement une pièce à usiner (W), l'appareil de maintien de matériel ayant une région axiale avant et une région axiale arrière et comprenant :
un mandrin tubulaire (14A, 14B) logé dans la région axiale avant et ayant une section de maintien susceptible de s'ouvrir et de se fermer ;
un organe d'actionnement (18) pour actionner ladite section de maintien pour s'ouvrir ou se fermer ; et
un mécanisme d'entraînement (20) pour amener ledit organe d'actionnement (18) à se déplacer entre une position de fonctionnement de fermeture permettant à ladite section de maintien de maintenir fermement une pièce à usiner (W) sous l'effet d'une force de pressage et une position de fonctionnement d'ouverture relâchant ladite force de pressage et permettant à ladite section de maintien de libérer la pièce à usiner (W) ;
ledit mécanisme d'entraînement (20) comprenant un organe d'entraînement bidirectionnel (62) pour appliquer de manière sélective, audit organe d'actionnement (18), l'une parmi une force d'entraînement normale pour amener ledit organe d'actionnement (18) à se déplacer à partir de ladite position de fonctionnement d'ouverture jusqu'à ladite position de fonctionnement de fermeture et une force d'entraînement inverse pour amener ledit organe d'actionnement (18) à se déplacer à partir de ladite position de fonctionnement de fermeture jusqu'à ladite position de fonctionnement d'ouverture,
ledit mécanisme d'entraînement (20) étant susceptible de positionner ledit organe d'actionnement (18) à une position intermédiaire entre ladite position de fonctionnement de fermeture et ladite position de fonctionnement d'ouverture, **caractérisé en ce que**,
lorsque ledit organe d'actionnement (18) est positionné à ladite position intermédiaire, ladite section de maintien dudit mandrin (14A, 14B) maintient la pièce à usiner (W) sous l'effet d'une deuxième force de pressage inférieure à ladite force de pressage permettant à ladite section de maintien de maintenir fermement la pièce à usiner (W),
l'appareil de maintien de matériel comprenant en outre un organe de sollicitation (94) sollicitant élastiquement ledit organe d'actionnement (18) axialement vers l'arrière,
et, lorsque ledit organe d'actionnement (18) est positionné à ladite position intermédiaire, ladite deuxième force de pressage étant générée par une force de sollicitation élastique dudit organe de sollicitation (94).

2. Appareil de maintien de matériel selon la revendication 1, comprenant, d'une manière interchangeable, ledit mandrin (14A, 14B) ayant une configuration fixe conçue pour recevoir ladite force de pressage sur ladite section de maintien dans un état fixe dudit mandrin (14A, 14B) pendant une période au cours de laquelle ledit organe d'actionnement (18) se déplace à partir de ladite position de fonctionnement d'ouverture jusqu'à ladite position de fonctionnement de fermeture, et ledit mandrin (14A, 14B) ayant une configuration mobile conçue pour recevoir ladite force de pressage sur ladite section de maintien dans un état mobile dudit mandrin (14A, 14B) se déplaçant conjointement avec ledit organe d'actionnement (18) pendant une période au cours de laquelle ledit organe d'actionnement (18) se déplace à partir de ladite position de fonctionnement d'ouverture jusqu'à ladite position de fonctionnement de fermeture.

3. Appareil de maintien de matériel selon la revendication 2, dans lequel ledit organe d'actionnement (18) comprend un premier élément tubulaire (48) conçu pour recevoir de manière sélective l'une parmi ladite force d'entraînement normale et ladite force d'entraînement inverse en provenance dudit organe d'entraînement bidirectionnel (62) dudit mécanisme d'entraînement (20), ledit mandrin (14A, 14B) ayant la configuration mobile étant à même d'être fixé de manière détachable audit premier élément tubulaire (48), et un deuxième élément tubulaire (52) conçu pour être échangé contre ledit mandrin (14A, 14B) ayant la configuration mobile et à même d'être fixé de manière détachable audit premier élément tubulaire (48) d'une manière alignée axialement, ledit deuxième élément tubulaire (32) étant conçu pour supporter ledit mandrin (14A, 14B) ayant la configuration fixe de manière relativement mobile dans une direction axiale.

4. Appareil de maintien de matériel selon la revendication 3, comprenant en outre un organe de support tubulaire logeant et supportant ledit organe d'actionnement (18) de manière relativement mobile dans une direction axiale ; dans lequel, lorsque ledit mandrin (14A, 14B) ayant la configuration mobile est fixé audit premier élément tubulaire (48), ledit premier élément tubulaire (48) et ledit mandrin (14A, 14B) ayant la configuration mobile se déplacent d'un seul tenant axialement par rapport audit organe de support sous l'effet de ladite force d'entraînement normale de telle sorte que ladite section de maintien dudit mandrin (14A, 14B) ayant la configuration mobile reçoive ladite force de pressage en provenance dudit organe de support et, lorsque ledit deuxième élément tubulaire (52) supportant ledit mandrin (14A, 14B) ayant la configuration fixe est fixé audit premier élément tubulaire (48), ledit premier élément tubulaire (48) et ledit deuxième élément tubulaire (52) se déplacent d'un seul tenant axialement par rapport audit mandrin (14A, 14B) ayant la configuration fixe sous l'effet de ladite force d'entraînement normale de telle sorte que ladite section de maintien dudit mandrin (14A, 14B) ayant la configuration fixe reçoive ladite force de pressage en provenance dudit deuxième élément tubulaire (52) supporté de manière coaxiale par ledit organe de support.

5. Appareil de maintien de matériel selon la revendication 2, dans lequel ladite force d'entraînement normale dudit mécanisme d'entraînement pour fermer ladite section de maintien dudit mandrin (14A, 14B) ayant la configuration fixe, et ladite force d'entraînement normale dudit mécanisme d'entraînement pour fermer ladite section de maintien dudit mandrin (14A, 14B) ayant la configuration mobile, sont des forces de poussée appliquées audit organe d'actionnement (18) dans des sens opposés l'un à l'autre.

6. Appareil de maintien de matériel selon la revendication 1, dans lequel ledit mécanisme d'entraînement comprend en outre un organe linéairement mobile (64) se déplaçant linéairement par rapport audit organe d'entraînement bidirectionnel (62) pour permettre audit organe d'entraînement bidirectionnel (62) de présenter de manière sélective l'une parmi ladite force d'entraînement normale et ladite force d'entraînement inverse ; et dans lequel ledit organe d'entraînement bidirectionnel (62) fonctionne de manière à convertir le déplacement linéaire dudit organe linéairement mobile (64) en un mouvement de balancement et à appliquer de manière sélective l'une parmi ladite force d'entraînement normale et ladite force d'entraînement inverse audit organe d'actionnement (18) par effet de levier.

7. Tour automatique comprenant :
l'appareil de maintien de matériel selon la revendication 1 ; et
la broche dans laquelle est incorporé ledit appareil de maintien de matériel.

8. Appareil de guidage de matériel conçu pour être incorporé dans une machine-outil et pour supporter une pièce à usiner (W) près de sa portion usinée, l'appareil de guidage de matériel ayant une région axiale avant et une région axiale arrière et comprenant :
une douille de guidage tubulaire (102A, 102B) logée dans la région axiale avant et ayant une section de support de matériel susceptible de s'ouvrir et de se fermer ;
un organe d'actionnement (18) pour actionner ladite section de support de matériel pour s'ouvrir ou se fermer ; et
un mécanisme d'entraînement (20) pour amener ledit organe d'actionnement (18) à se déplacer entre une position de fonctionnement de fermeture permettant à ladite section de support de matériel de supporter une pièce à usiner (W) d'une manière centrée sous l'effet d'une force de pressage et une position de fonctionnement d'ouverture relâchant ladite force de pressage et permettant à ladite section de support de matériel de libérer la pièce à usiner (W) ;
ledit mécanisme d'entraînement (20) comprenant un organe d'entraînement bidirectionnel (62) pour appliquer de manière sélective, audit organe d'actionnement (18), l'une parmi une force d'entraînement normale pour amener ledit organe d'actionnement (18) à se déplacer à partir de ladite position de fonctionnement d'ouverture jusqu'à ladite position de fonctionnement de fermeture et une force d'entraînement inverse pour amener ledit organe d'actionnement (18) à se déplacer à partir de ladite position de fonctionnement de fermeture jusqu'à ladite position de fonctionnement d'ouverture ;
ledit mécanisme d'entraînement (20) étant susceptible de positionner ledit organe d'actionnement (18) à une deuxième position de fonctionnement de fermeture espacée, plus loin que ladite position de fonctionnement de fermeture, à l'écart de ladite position de fonctionnement d'ouverture ;
**caractérisé en ce que**, lorsque ledit organe d'actionnement (18) est positionné à ladite deuxième position de fonctionnement de fermeture, ladite section de support de matériel de ladite douille de guidage (102A, 102B) maintient fixement et fermement la pièce à usiner (W) sous l'effet d'une deuxième force de pressage supérieure à ladite force de pressage permettant à ladite section de support de matériel de supporter la pièce à usiner (W) de la manière centrée ;
l'appareil de guidage de matériel comprenant en outre un organe de sollicitation (94) sollicitant élastiquement ledit organe d'actionnement axialement vers l'arrière,
et, lorsque ledit organe d'actionnement (18) est positionné à ladite position de fonctionnement de fermeture, ladite force de pressage étant générée par une force de sollicitation élastique dudit organe de sollicitation (94) et comprenant en outre, d'une manière interchangeable, ladite douille de guidage (102A, 102B) ayant une configuration fixe conçue pour recevoir ladite force de pressage sur ladite section de support de matériel dans un état fixe de ladite douille de guidage (102A, 102B) pendant une période au cours de laquelle ledit organe d'actionnement (18) se déplace à partir de ladite position de fonctionnement d'ouverture jusqu'à ladite position de fonctionnement de fermeture, et ladite douille de guidage (102A, 102B) ayant une configuration mobile conçue pour recevoir ladite force de pressage sur ladite section de support de matériel dans un état mobile de ladite douille de guidage (102A, 102B) se déplaçant conjointement avec ledit organe d'actionnement (18) pendant une période au cours de laquelle ledit organe d'actionnement (18) se déplace à partir de ladite position de fonctionnement d'ouverture jusqu'à ladite position de fonctionnement de fermeture.

9. Appareil de guidage de matériel selon la revendication 8, dans lequel ledit organe d'actionnement (18) comprend un premier élément tubulaire (48) conçu pour recevoir de manière sélective l'une parmi ladite force d'entraînement normale et ladite force d'entraînement inverse en provenance dudit organe d'entraînement bidirectionnel (62) dudit mécanisme d'entraînement, ladite douille de guidage (102A, 102B) ayant la configuration mobile étant à même d'être fixée de manière détachable audit premier élément tubulaire (48), et un deuxième élément tubulaire (52) conçu pour être échangé contre ladite douille de guidage (102A, 102B) ayant la configuration mobile et susceptible d'être fixé de manière détachable audit premier élément tubulaire (48) d'une manière alignée axialement, ledit deuxième élément tubulaire (5 2) étant conçu pour supporter ladite douille de guidage (102A, 102B) ayant la configuration fixe de manière relativement mobile dans une direction axiale.

10. Appareil de guidage de matériel selon la revendication 9, comprenant en outre un organe de support tubulaire logeant et supportant ledit organe d'actionnement (18) de manière relativement mobile dans une direction axiale ; dans lequel, lorsque ladite douille de guidage (102A, 102B) ayant la configuration mobile est fixée audit premier élément tubulaire (48), ledit premier élément tubulaire (48) et ladite douille de guidage (102A, 102B) ayant la configuration mobile se déplacent d'un seul tenant axialement par rapport audit organe de support sous l'effet de ladite force d'entraînement normale de telle sorte que ladite section de support de matériel de ladite douille de guidage (102A, 102B) ayant la configuration mobile reçoive ladite force de pressage en provenance dudit organe de support et, lorsque ledit deuxième élément tubulaire (52) supportant ladite douille de guidage (102A, 102B) ayant la configuration fixe est fixé audit premier élément tubulaire (48), ledit premier élément tubulaire (48) et ledit deuxième élément tubulaire (52) se déplacent d'un seul tenant axialement par rapport à ladite douille de guidage (102A, 102B) ayant la configuration fixe sous l'effet de ladite force d'entraînement normale de telle sorte que ladite section de support de matériel de ladite douille de guidage (102A, 102B) ayant la configuration fixe reçoive ladite force de pressage en provenance dudit deuxième élément tubulaire (52) supporté de manière coaxiale par ledit organe de support.

11. Appareil de guidage de matériel selon la revendication 8, dans lequel ladite force d'entraînement normale dudit mécanisme d'entraînement pour fermer ladite section de support de matériel de ladite douille de guidage (102A, 102B) ayant la configuration fixe, et ladite force d'entraînement normale dudit mécanisme d'entraînement pour fermer ladite section de support de matériel de ladite douille de guidage (102A, 102B) ayant la configuration mobile, sont des forces de poussée appliquées audit organe d'actionnement (18) dans des sens opposés l'un à l'autre.

12. Appareil de guidage de matériel selon la revendication 8, dans lequel ledit mécanisme d'entraînement (20) comprend en outre un organe linéairement mobile (64) se déplaçant linéairement par rapport audit organe d'entraînement bidirectionnel (62) pour permettre audit organe d'entraînement bidirectionnel (62) de présenter de manière sélective l'une parmi ladite force d'entraînement normale et ladite force d'entraînement inverse ; et dans lequel ledit organe d'entraînement bidirectionnel (62) fonctionne de manière à convertir le déplacement linéaire dudit organe linéairement mobile (64) en un mouvement de balancement et à appliquer de manière sélective l'une parmi ladite force d'entraînement normale et ladite force d'entraînement inverse audit organe d'actionnement (18) par effet de levier.

13. Tour automatique comprenant :
l'appareil de guidage de matériel selon la revendication 8 ; et
dans lequel ledit appareil de guidage de matériel est monté de manière adjacente à une position d'usinage pour la pièce à usiner.
